# EUROPEAN PATENT SPECIFICATION

(11) **EP 0 921 526 B1**
(45) Date of publication and mention of the grant of the patent: **21.05.2003**
(21) Application number: 98309912.8
(22) Date of filing: 03.12.1998
(51) Int. Cl.: G11B 23/03, G11B 23/28, G11B 23/40

(54) **Disc cartridge having sensor hole to be opened/closed and apparatus and method for driving the same**
Plattenkassette mit zu öffnendem/schliessendem Sensorloch und Antriebsgerät und -verfahren dazu
Cassette à disque ayant un trou de détection à ouvrir ou fermer, appareil et procédé d'entraînement

(30) Priority: 06.12.1997 KR 9766479; 14.01.1998 KR 9800849; 10.06.1998 KR 9821401; 25.06.1998 KR 9824157; 30.07.1998 KR 9830964
(43) Date of publication of application: 09.06.1999
(73) Proprietor: Samsung Electronics Co., Ltd., Suwon-city, Kyungki-do (KR)
(72) Inventor: Choi, Han-kook, Kweonsun-gu, Suwon-city, Kyungki-do (KR); Park, Jong-phil, Paldal-gu, Suwon city, Kyungki-do (KR); Park, Hee-deuk, Bundang-gu, Sungnam-city, Kyungki-do (KR); Lee, Kyu-hyeong, Suwon-city, Kyungki-do (KR); Ko, Jung-wan, Yongin-city, Kyungki-do (KR); Shin, Dong-ho, Seodaemeun-gu, Seoul (KR); Park, In-sik, Kweongsun-gu, Suwon-city, Kyungki-do (KR); Seo, Young-sun, Sungnam-city, Kyungki-do (KR)
(74) Representative: Chugg, David John

(56) References cited:
- EP-A- 0 421 775
- EP-A- 0 744 743
- EP-A- 0 768 665
- EP-A- 0 833 330
- US-A- 5 541 903
- PATENT ABSTRACTS OF JAPAN vol. 098, no. 002, 30 January 1998 -& JP 09 282833 A (MITSUBISHI ELECTRIC CORP), 31 October 1997

## Description

The present invention relates to an optical information processing field in which digitalized information is recorded/reproduced on/from a disc, and more particularly to a disc cartridge in a drive apparatus for Digital Versatile Disc Random Access Memory (Hereinafter referred to as 'DVD-RAM'), which has a sensor hole to be opened/closed, and to an apparatus and method for driving the same in which the sensor hole is opened/closed in accordance with a opened state of the cartridge and an inspected state of the disc.

Here, the term "opened state of the cartridge" means that the disc has been withdrawn from a cartridge case to be used and returned thereto. Further, the term the "inspected state of the disc" means that the disc returned to the cartridge case has gone through a Certification and/or re-Certification process so that any contamination and/or defects of the disc are eliminated by the defect managing method suggested in corresponding specifications.

Further, the term of "Verification" hereinafter means one of information recording processes in which the newly recorded information is re-read and compared and checked with respect to the prior existing information to confirm that the new information has been successfully recorded. Also, the term of "Certification" hereinafter means the process by which defects are detected over a predetermined area or entire area of the disc.

Generally, a DVD-RAM driver employs a cartridge to protect a disc from bad outside factors such as scratches, fingerprints, dirt, or the like, and to secure a safe disc environment while recording.

As described, employing such a cartridge gives an advantage in that the disc is protected, while it also brings shortcomings in that a laptop personal computer or the like is given a limit in terms of how thin it can be made and these days, when purchasers are demanding ever thinner products, this is a problem.

To meet the demands of purchasers, i.e. to realize a thinner product, a bare disc itself has to be used. Since the bare disc has no way to be protected from the scratches, fingerprints, dirts, etc., the bare disc has to go through an information Verification process in which the recorded information of the disc is verified.

Such a Verification process brings the advantage that any temporarily or permanently damaged area of the disc is detected in advance so that a safety of the information is promoted. At the same time, however, it also brings the shortcoming that access time of the driver is lengthened due to the presence of the Verification process in which the recorded information is re-read and compared and checked with respect to the previously exited information to confirm that the newly recorded information is successively recorded.

Comparatively, the disc in the cartridge is protected from scratches, fingerprints, dirt, etc., so that, once the unavailable area of the disc is checked, the recorded information can be kept being read without going through the Verification process thereby having still less possible errors. Accordingly, most of the information reproducing apparatuses employ a cartridge, selecting the way of information recording which does not require Verification process.

According to Standard DVD-RAM specifications, three types of the cartridges are defined. In the Standard DVD-RAM specifications, the state that the disc has been withdrawn from the cartridge case is additionally defined, and it is defined that such state is detected by a A1 sensor hole. In a double-side disc, there are provided both A1 and B1 sensor holes corresponding the respective sides of the disc.

The first type of cartridge receives a single-side or double-side disc whose withdrawal from the cartridge is not available once the disc has been received. The second type cartridge receives a single-side disc which can be withdrawn from the cartridge. When the disc is withdrawn from the cartridge, the A1 sensor hole for sensing such a state is opened and never to be closed. Thus, once the disc has been withdrawn from the cartridge, such state is noticeable. A third type of cartridge has the A1 sensor hole for sensing disc withdrawal, which is initially in an open-state. Thus, in this type of arrangement the disc can be repeatedly withdrawn and returned from/to the cartridge case. Here, the cartridge includes a disc and a cartridge case. Therefore, the term "cartridge" collectively means both the cartridge case and the disc received in the cartridge case.

In the Standard DVD-RAM specifications also, it is defined that the second and third type cartridges whose discs have been withdrawn from the cartridge case are put under the same condition of the bare disc. That is, the second type cartridge having the disc once withdrawn from the cartridge case is used under the same condition with the third type cartridge, and since the discs received in these types of cartridges are thus unclear about damage from the scratches, fingerprints, dirts, etc., the disc is put under the same conditions as a bare disc would be. Accordingly, after a recording process, the Verification process is required, and the time for information processing is lengthened.

The below table shows three types of cartridges, and open/closed-states of A1 sensor holes respectively corresponding to the cartridges.

**[Table 1]**

| Cartridge | Initial state | Disc-withdrawing | Disc-returning | Available disc |
|---|---|---|---|---|
| 1st type | Closed | Disc not-withdrawn | - | Single & Double-side |
| 2nd type | Closed | Automatically open | Open-state continue | Single-side |
| 3rd type | Open | Open-state continue | Open-state continue | Single-side |

As shown in the above table, the second and the third type cartridges incorporating discs which have been withdrawn therefrom are put under the same conditions as with a bare disc, even though such discs are protected in the cartridge case. Thus, the user cannot take the full benefit of having the cartridges.

More specifically, when the discs in the second and the third type cartridges are withdrawn therefrom for disc replacement purpose, the A1 sensor holes for sensing the disc withdrawing are placed in the open-state. Such opened A1 sensor holes are never thereafter closed, and accordingly, when the new disc is received in the cartridge and the cartridge is received into the driver, it is determined from the open-state of the A1 sensor hole that the Verification process has to be performed. The problem therefore arises in that even in the cases where a disc does not actually require the Verification process, it still has to go through that Verification process, and the time for recording and/or reproducing the information on/from the disc is accordingly lengthened.

JP-A-09-282 833 and EP-A-0744743 both disclose a cartridge comprising a cartridge case for receiving a disc; and a sensor hole for sensing whether the disc has been withdrawn from the cartridge case or not, which sensor hole remains in a state indicating a disc has been withdrawn thereafter.

The present invention has been made with a view to overcome or reduce the above-mentioned problems, and accordingly it is an aim of preferred embodiments of the present invention to provide a cartridge having a sensor hole which may be opened/closed at a user's will so that a disc whose state has already been verified to the user does not need to go through the Verification process unnecessarily.

Another aim of embodiments of the present invention is to provide a cartridge driving apparatus and method thereof in the second or third type of cartridge in which the states of the disc are verified through the open-state of the sensor hole and in which the sensor hole is subsequently controlled to be closed.

Yet another aim of embodiments of the present invention is to provide a cartridge having such sensor hole to be opened/closed and driving apparatus and method thereof.

According to a first aspect of the present invention there is provided, a cartridge which comprises a cartridge case for receiving a disc, and at least one sensor hole for sensing whether the cartridge case has been opened or not to withdraw or replace the disc within the cartridge case, characterised in that the cartridge further comprises a means for manually opening/closing the sensor hole.

Here, the cartridge may be of a second or third type of cartridges as defined in the standard DVD-RAM specifications. The type of disc available for the cartridge may be single and double-side discs.

According to preferred embodiments of the present invention, the cartridge has a cartridge case for receiving a disc, and an opening cover separably mounted to a rear side of the cartridge case while supporting the disc. At least one sensor hole is formed at the cartridge case to sense whether the disc has been withdrawn from the cartridge case or not. The sensor hole may be opened/closed by a sensor lever in accordance with the open state of the cartridge and/or inspected state of the disc. The sensor lever is preferably disposed at the opening cover, and has an opening/closing member disposed at the sensor hole of the cartridge case, and a tension member in contact with an inner side surface of the cartridge case and thereby giving a predetermined degree of tension thereto and positioning the opening/closing member of the sensor lever toward the open-position of the sensor hole.

Further, cartridge according to preferred embodiments of the present invention feature a locker for fixedly supporting the opening/closing member. The locker preferably has such a structure that the opening/closing member is shifted from the open-position to the close-position when an outside force exceeding a predetermined extent is exerted thereto, while the locker substantially supports the opening/closing member so as to prevent the opening/closing member from being returned to the open-state by the returning tension of the tension part of the sensor lever.

According to another preferred embodiment of the present invention, the cartridge has a cartridge case for receiving a disc, an opening cover separably mounted to a rear side of the cartridge case while supporting the disc so that the disc can be withdrawn/received from/into the cartridge case, an A1 sensor hole never to be reopened/re-closed for sensing whether the disc has been withdrawn from the cartridge case or not, second sensor hole for indicating whether the disc has been withdrawn from the cartridge case or not, and a means for opening/closing the second sensor hole in accordance with the state of the disc.

The A1 sensor hole is preferably vertically defined through the upper and lower portions of the cartridge case, and so is the second sensor hole. A horizontal sensor hole is preferably formed intercommunicating with the A1 sensor hole and the second sensor hole. Thus, both a driver having vertical sensor switches and a driver having horizontal sensor switches may utilize the cartridge.

An A3 sensor hole defined in the Standard DVD-RAM specifications may be substituted for the second sensor hole. In this case, the means for opening/closing the sensor hole has an opening/closing member, a tension rib, and a locking means. The opening/closing member is preferably movably disposed at the opening cover, while corresponding to the A3 sensor hole and moved to open or close position of the A3 sensor hole, and thereby selectively opening the A3 sensor hole. The tension rib preferably elastically supports the opening/closing member which has been moved to the open position of the A3 sensor hole. The locking means preferably fixedly supports the opening/closing member which has been moved to the open position of the A3 sensor hole. The locking means preferably has a locking projection protruded from an upper side of the opening/closing member, and a locking portion formed at an inner side of the cartridge case corresponding to the locking projection.

The opening/closing member of the sensor hole opening/closing means may extend over to the position of the A1 sensor hole. And in this case, a space corresponding to the A1 sensor hole is preferably defined at the extended portion of the opening/closing member. Also, a tab for covering the A1 sensor hole may be disposed at the space, while positioned either to an inner circumference of the space or the cartridge case. The opening/closing member is preferably only moved in absence of the tab.

In preferred arrangements the A3 sensor hole is always in closed state when the A1 sensor hole is closed, while the A3 can be either in open state or in closed state when the A1 sensor hole is opened. Also, when the A3 sensor hole is in a closed state, it means the Verification process is required while recording, while the opening of A3 sensor hole means that the Verification process is not required while recording.

When the A3 sensor hole in the Standard DVD-RAM specifications is employed as the second sensor hole, the A3 sensor hole may be positioned adjacently to a recording-prevention sensor hole, and the two sensor holes may be subsequently opened/closed. In this case, the sensor hole opening/closing means preferably has left and right locking portions and a sensor lever. The left and right locking portions are preferably formed adjacently to outer side ends of the A3 sensor hole and the recording-prevention sensor hole on the cartridge case. The sensor hole preferably controls one of two sensor holes to the closed-state by means of corresponding locking portion. When the sensor lever is not effected by tension, the sensor lever is preferably positioned at a middle position so that both of two sensor holes are kept in closed-state.

The sensor lever preferably has an opening/closing member and a tension lever. The opening/closing member is preferably capable of covering both of the adjacently formed A3 sensor hole and the recording-prevention sensor hole. The tension lever may be disposed on the opening cover while supporting the opening/closing member, to return the opening/closing member to corresponding position when the opening/closing member is opened/closed. The sensor lever preferably has such a structure that the tension lever is automatically returned to the middle position upon re-closing of the opening cover.

Here, when the recording-prevention sensor hole is in open-state, A3 sensor hole is preferably not effected therefrom, while the A3 sensor hole is either in open-state or in closed-state when the recording-prevention sensor hole is in closed-state. In this case, the closed-state of the A3 sensor hole preferably means that the Verification process is required while recording, while the open-state of the A3 sensor hole means that the Verification process is not required while recording.

According to yet another preferred embodiment of the present invention, the cartridge has a cartridge case, an opening cover separably mounted to a rear side of the cartridge case to support the disc with respect to the cartridge case so that the disc can be withdrawn/received from/in the cartridge case, an oval sensor hole having an integrated sensor hole and a recording-prevention sensor hole for sensing whether the disc has been withdrawn from the cartridge case or not, a left and right locking portions adjacently formed to both sides of the oval sensor hole, and a sensor lever for controlling one of both sensor holes to a closed-state by means of respective corresponding locking portions. Also, preferably, the sensor lever controls both of the sensor holes to closed-state while being positioned at the middle position when the sensor lever is not effected by the tension.

Another aspect of the present invention concerns a method for driving a cartridge having sensor hole to be opened/closed having steps of, (a) determining whether the sensor hole is in a first state, indicating that the cartridge has been opened to withdraw or replace the disc within the cartridge, (b) performing a certification process when the sensor hole is in the first state, (c) manually controlling the sensor hole upon completion of the certification process, to set the sensor hole to a post-certification and/or re-certification state.

According to a preferred embodiment of the present invention, the method for driving the cartridge further includes a step (d) of recording the information in absence of Verification process upon completion of the step (c).

According to another preferred embodiment of the present invention, the method for driving the cartridge further includes a step (e) of recording the information while performing Verification process in absence of the Certification process when the sensor hole is in the first state.

Further, the step (a) may include an additional step (a1) of informing to user that he may accelerate the information processing process by setting the sensor hole in the first state and performing the Certification process.

The Certification process is preferably performed while maintaining previously existed information in the step (b), and if the defected area exceeds the predetermined extent, an additional step (b1) of recommending the user for disc cleaning may be included.

Also, the step (c) may further include a step (c1) of recommending the user that he may accelerate the information processing process by setting the sensor hole at the inspected state thereby not going through the Verification process. Here, the "inspected state" is a second state in which the sensor hole senses that the disc has not been withdrawn from the cartridge.

In the driving method described above, when the sensor hole is the A1 sensor hole of the Standard DVD-RAM specifications, the first state means the open-state and the second state means the closed-state of the sensor hole.

Further, when the sensor hole is the one having the A1 sensor hole which senses the disc withdrawing from the cartridge case, and not to be re-opened/re-closed, then the first state means the closed-state and the second state means the open-state.

Still further, when the sensor hole is the one formed adjacently to the recording-prevention sensor hole of the Standard DVD-RAM specifications and to be controlled by one sensor lever to be open/closed, then the first state means the closed-state and the second state means the open-state.

Meanwhile, the method for driving the cartridge according to the preferred embodiments of the present invention preferably further includes a step (f) of preferentially preventing the recording as the result of giving a priority to the open-state of the recording-prevention sensor hole to the state of the sensor hole.

According to another aspect of the present invention, there is provided an apparatus for driving the cartridge having sensor hole to be opened/closed having a first sensor switch and a second sensor switch. The first sensor switch is preferably turned 'on/off' by being selectively inserted into a first sensor hole of the cartridge so that the first sensor switch indicates open/closed-states of the first sensor hole by applying predetermined signal to a microcomputer. The second sensor switch is preferably turned 'on/off' by being selectively inserted into a second sensor hole of the cartridge which indicates open/closed-states of the cartridge so that the second sensor switch indicates open/closed-states of the second sensor hole by applying predetermined signal to a microcomputer. Accordingly, when the first sensor hole is in closed-state, then it is preferably determined that the disc has been withdrawn from the cartridge case, so that the notice for performing the Certification process is generated. Further, when the state of the second sensor hole is determined that it is in closed-state while the first sensor hole is in open-state, then it is determined that the disc has been withdrawn from the cartridge case and that there has been no proper process performed, so that the recording is performed along with the Verification process. While, when the second sensor hole is in open-state, then it is preferably determined that the disc has been withdrawn from the cartridge case and that there has been proper process (defects check and cleaning) so that the recording is performed without the Verification process.

For a better understanding of the invention, and to show how embodiments of the same may be carried into effect, reference will now be made, by way of example, to the accompanying diagrammatic drawings, in which:
Figure 1 is a perspective view showing a cartridge according to a first preferred embodiment of the present invention being assembled;
Figure 2 is an exploded perspective view showing a cartridge according to the first preferred embodiment of the present invention, in which the assembling relations of the components are shown;
Figure 3 is a plan view showing the cartridge of Figure 2 whose opening cover is closed;
Figure 4 is a plan view showing the cartridge of Figure 2 whose opening cover is opened;
Figure 5 is a flow chart for explaining a method for driving the cartridge having a sensor hole to be opened/closed according to a preferred embodiment of the present invention;
Figure 6 is a plan view showing a cartridge having a sensor hole to be opened/closed according to the second preferred embodiment of the present invention, in which the opening cover is separated therefrom;
Figure 7 is a sectional view taken along the line A-A of the opening cover of the cartridge of Figure 6;
Figure 8 is a plan view of a lower shell of the cartridge of Figure 6, showing the sensor hole;
Figure 9 is a front elevation of the opening cover of the cartridge of Figure 6, showing the horizontal sensor hole;
Figures 10A, 10B, and 10C are sectional views for showing the operating relations of the means for opening/closing the sensor hole, when the vertical sensor switches are used in the cartridge of Figure 6;
Figures 11A, 11B, and 11C are sectional views for showing the operating relations of the means for opening/closing the sensor hole, when the horizontal sensor switches are used in the cartridge of Figure 6;
Figure 12 is a vertical sectional view showing a main portion of the cartridge having a sensor hole according to a third preferred embodiment of the present invention;
Figures 13A, 13B, and 13C are transverse sectional views for explaining a structure and operation of means for opening/closing the sensor hole of Figure 12;
Figure 14 is a plan view showing the cartridge having sensor hole to be opened/closed according to a fourth preferred embodiment of the present invention, in which the opening cover is separated therefrom;
Figure 15 is a sectional view taken along the line B-B of Figure 14, to show one example of an opening/closing member of the cartridge of Figure 14;
Figures 16A, 16B, and 16C are sectional views taken along the line C-C of Figure 14, to explain the structure and operation of the means for opening/closing the sensor hole of the cartridge;
Figure 17 is a flow chart for explaining a method for driving the cartridge having the sensor hole to be opened/closed according to another preferred embodiment of the present invention;
Figures 18A and 18B are a plan view and a side view showing the cartridge having the sensor hole integrated with the recording-prevention sensor hole according to a fifth preferred embodiment of the present invention, in which the recording-prevention sensor hole is in closed-state;
Figures 19A and 19B are a plan view and a side view for showing the recording-prevention sensor hole and the sensor hole of Figure 18, which are in closed-state;
Figures 20A and 20B show a plan view and a side view in which only the sensor hole is closed in Figure 18; and
Figure 21 is a flow chart for explaining a method for driving the cartridge having a sensor hole to be opened/closed according to yet another preferred embodiment of the present invention.

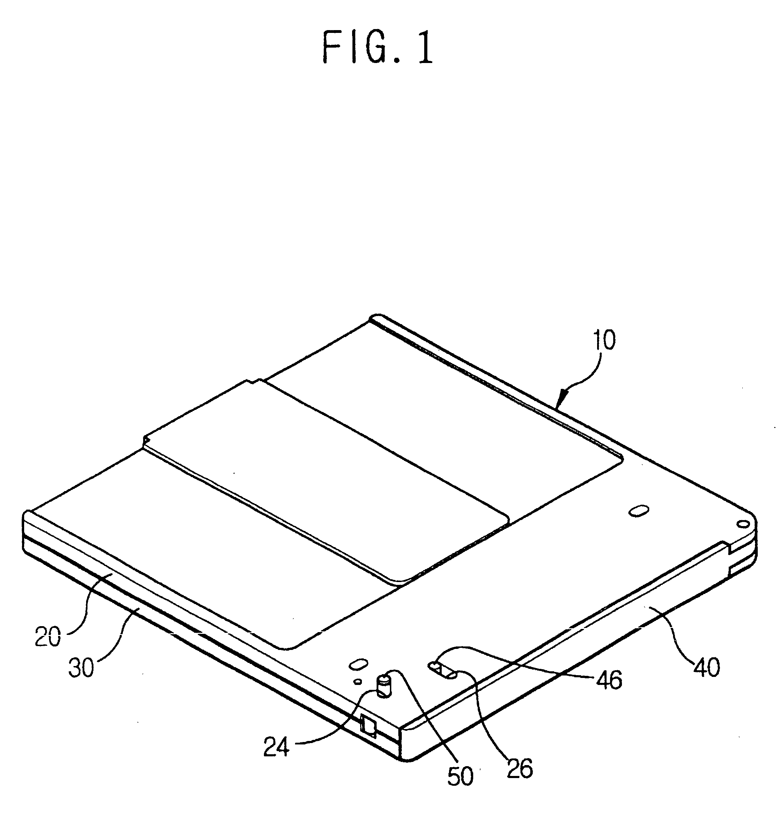

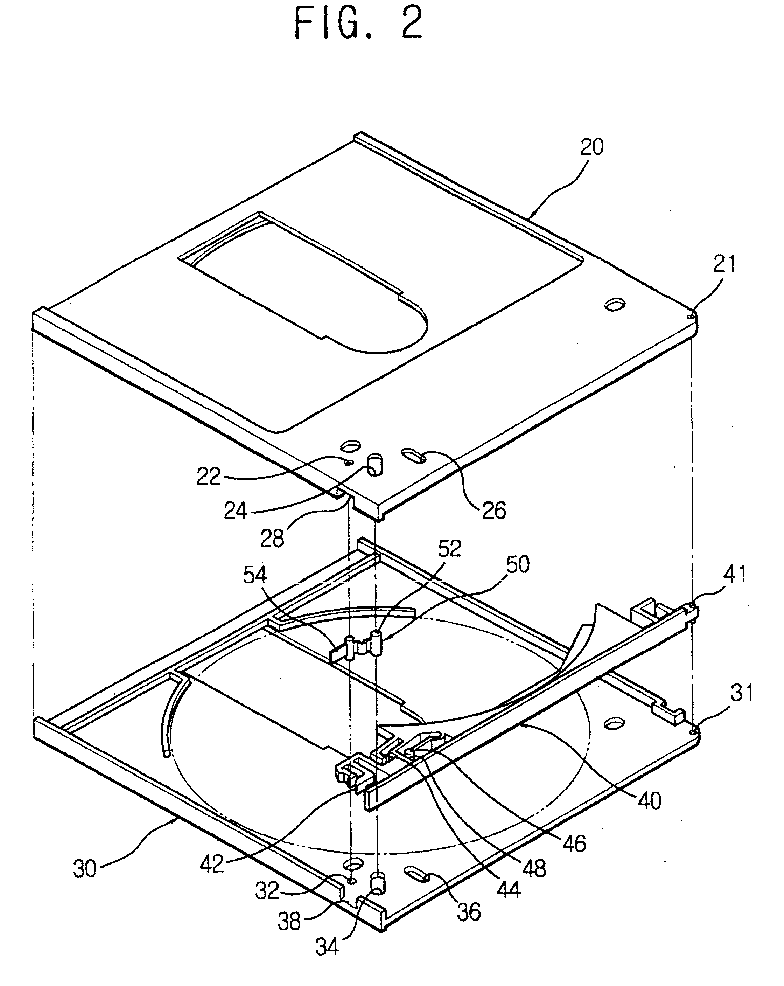

Figure 1 is a perspective view showing a cartridge according to the first preferred embodiment of the present invention being assembled, and Figure 2 is an exploded perspective view showing a cartridge according to the first preferred embodiment of the present invention, in which the assembling relations of the components are shown.

In Figures 1 and 2, a reference numeral 10 is a cartridge case which has an upper shell 20 and a lower shell 30. Further, the reference numeral 40 is an opening cover, and 50 is a sensor lever.

In Figure 1, the positions of an A1 sensor hole 24, the sensor lever 50 for opening/closing the A1 sensor hole, and the opening cover 40 for withdrawing a disc from the cartridge case 10 are respectively shown. The A1 sensor hole 24 has an oval shape, and has an unique feature differing from the conventional cartridge in that the A1 sensor hole 24 is opened/closed by means of the sensor lever 50. A protect lever 46 functions to open/close a recording-prevention sensor hole 26. The recording-prevention sensor hole 26 is generally employed to prevent user's mistakes such as information-deleting or information-overwriting.

Refer to Figure 2, the opening cover 40 is assembled to the cartridge case 10 by its rotary shaft 41 rotatably inserted through support holes 21 and 31 which are respectively formed at the upper shell 20 and the lower shell 30. Thus, the opening cover 40 is pivotably opened/closed while being assembled to the cartridge case 10.

The sensor lever 50 is assembled through sensor lever support holes 22 and 32 respectively formed at the upper and the lower shells 20 and 30. The sensor lever 50 has an opening/closing member 52 and a tension member 54. The opening/closing member is positioned at the A1 sensor holes 24 and 34, while the tension member 54 contacts with side surfaces of the upper and the lower shells 20 and 30. The tension member 54 is in contact with the side surfaces of the upper and the lower shells 20 and 30, thereby gives a tension of predetermined degree to the sensor lever. Thus, in the event that the opening cover 40 is not assembled or opened, the opening/closing member 52 is shifted to the open-position in which the A1 sensor holes 24 and 34 are in open-state.

Meanwhile, the opening cover 40 respectively has a first and a second locker 42 and 44. The first locker 42 functions to lock the opening cover 40 in co-operation with respective locking holes 28 and 38, so that the opening cover 40 does not open accidentally. When the user needs to open the opening cover 40 to get the disc received therein, the user pushes the first locker 42 through the locking holes 28 and 38 toward an inner portion of the opening cover 40, whereby unlocks the locking state of the opening cover 40. Thus, the opening cover 40 can be opened with respect to the cartridge case 10.

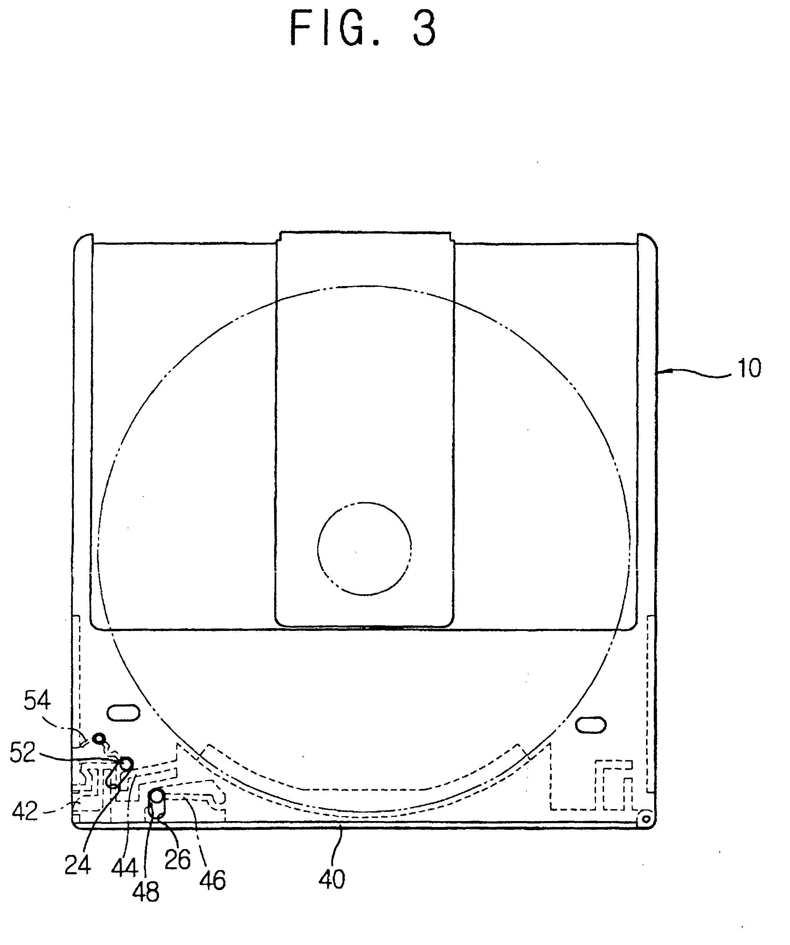

Further, in a state that the opening cover 40 is in closed-state, and the opening/closing member 52 is shifted to the close-position, the second locker 44 functions to support the opening/closing member 52 with a predetermined degree of force, by means of a bent portion thereof which is shown in Figure 3. The bent portion is formed approximately at a middle portion of the A1 sensor hole 24. Thus, the opening/closing member 52 is not returned to its initial position by a returning force of the tension member 54.

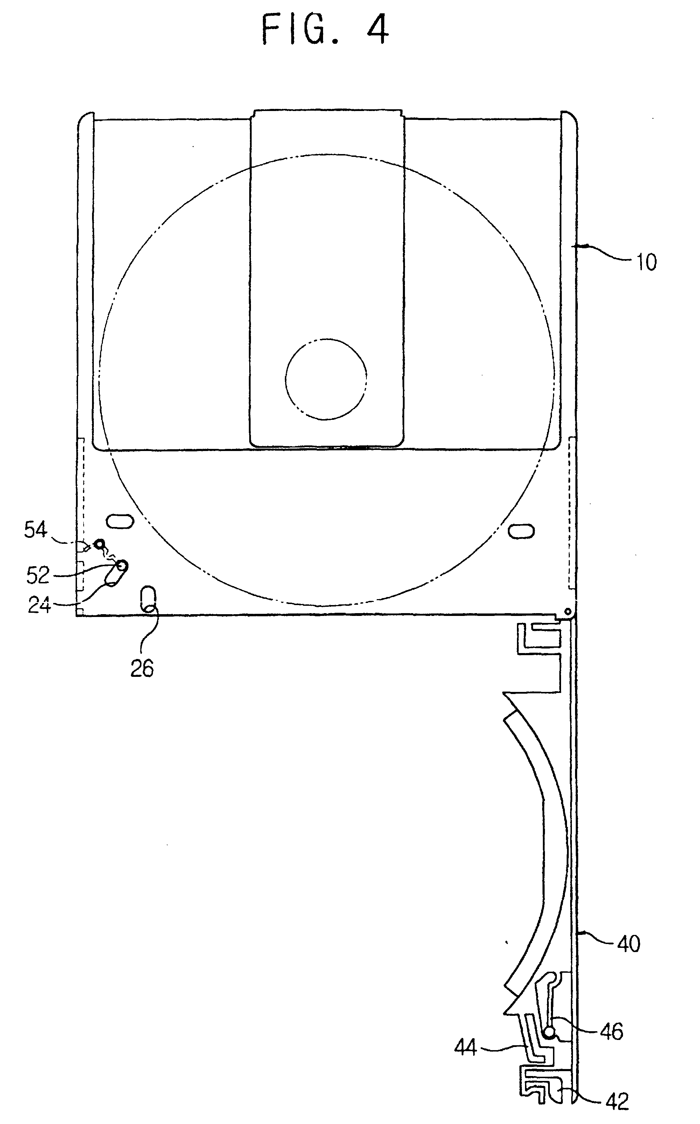

Figure 4 shows the opening/closing member 52 of the sensor lever 50 when the opening cover 40 is in open-state.

Meanwhile, as shown in Figure 2, a protect lever 46 having elasticity incorporates with a locking portion 48 in order to close or open a recording-prevention sensor hole 26.

It would be noted that such structure for opening/closing the A1 sensor hole 24 shown in Figure 2 is one of various possible embodiments. There could be additional embodiment such that the A1 sensor hole (or B1 sensor hole) of the double-side disc is automatically opened, and the user manually closes the opened sensor hole after the Certification process in which the possible defects of the disc is checked.

As described, according to the cartridge of the present invention, the position of A1 sensor hole is automatically shifted to the open-position when the opening cover of the cartridge case is opened, and maintains such open-state even when the opening cover is closed again. Also, since the user can shift the position of the A1 sensor hole to the closed-state after the Certification or re-Certification process, the information recording speed deterioration resulting from the presence of Verification process is prevented.

More specifically, information recording speed can be enhanced by having second and the third type cartridges whose physical shape and function are same, while the second type cartridge is re-defined as a cartridge which does not require the Verification process during recording, and the third type cartridge is re-defined as a cartridge which has to go through the Verification process while recording. Here, the third type cartridge has a condition that the information can be recorded without the Verification process, and a structure through which the user can re-close the A1 sensor hole when the Non-Verification condition is satisfied.

Here, the Non-Verification condition of the present invention is that the disc has been once withdrawn from the cartridge case. The below table shows such states as described above.

**[Table 2]**

| Cartridge | Initial state | Disc-withdrawn | Disc-returned | Post-Verification |
|---|---|---|---|---|
| 1st type | Closed | Disc-not-withdrawn | - | Closed-state continue |
| 2nd type | Closed | Automatically opened | Open-state continue | Closed by user |
| 3rd type | Open | Open-state continue | Open-state continue | Closed by user |

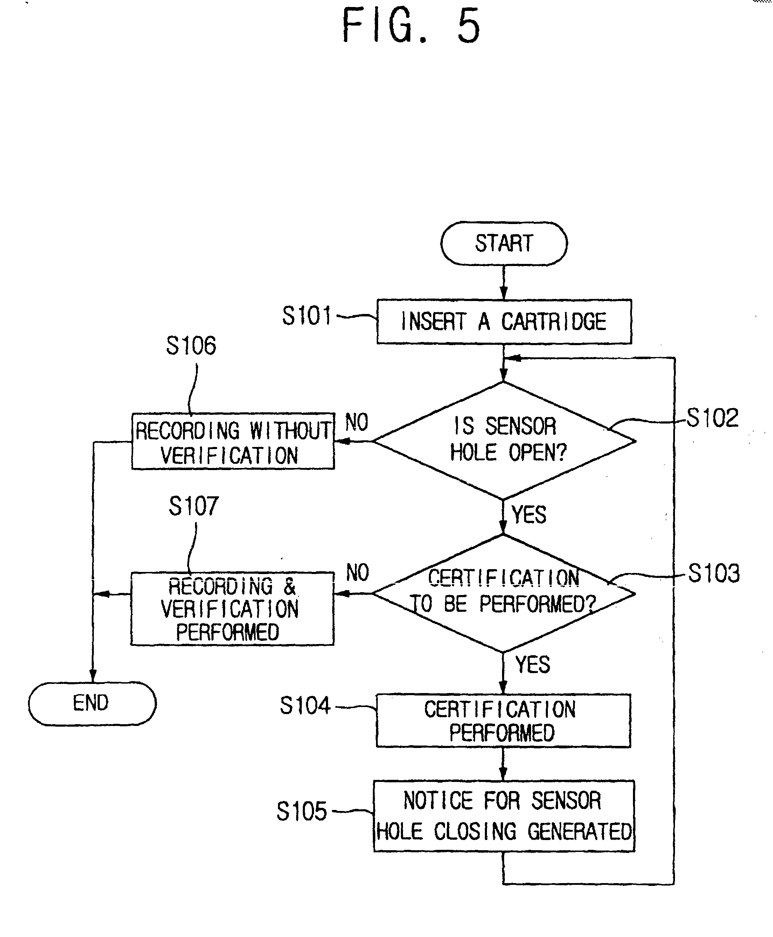

To overcome the problem of recording delay of the conventional second and the third type cartridges (whose disc has been withdrawn), due to the presence of the Verification process (as described, the disc in this cartridge case is put under the same condition of the bare disc), the user manually closes the open A1 sensor hole after the Verification of the disc, which is in open-state after withdrawing of the disc, so that the information is recorded on the disc under the same condition with the second type cartridge whose disc has not been withdrawn. Such is described in greater detail with respect to Figure 5.

Referring to Figure 5, the cartridge whose disc has been once withdrawn therefrom and returned thereto is inserted into the driver (Step 101). Then, it is determined whether the A1 sensor hole is in an open-state or closed-state (Step 102).

In the Step 102, if the A1 sensor hole is in open-state, it is determined whether the Certification process has to be performed (Step 103), and then the Verification process is performed (Step 104).

The Certification process of the present invention is performed in a particular format suggested by the Standard DVD-RAM specifications. In this situation, the Certification process is not an Initialization process in which the previously existed information is ignored, but the re-Certification process in which the existed information is maintained. Further, in Step 104 of performing the re-Certification process, when disc defects exceed a predetermined extent, there can be an additional step of informing the user of such states and recommending for eliminating such defects in a proper way. Further description on the processes and method about the re-Certification process will be omitted, since it will be easily understood by a person skilled in the art.

Also, in Step 102, when the cartridge whose A1 sensor hole is in open-state is inserted, a step of recommending the user that he may accelerate the processes by performing the re-Certification process, can be additionally included.

After the re-Certification process, the information is generated to recommend that the user may shift the position of the A1 sensor hole to the close-position, so that he may accelerate the information processing processes due to the absence of the Verification process (Step 105).

Meanwhile, in Step 102, when the A1 sensor hole is in closed-state, it is performed the recording process without the Verification process (Step 106). Also, in Step 103, when the A1 sensor hole is in open-state and the Certification process has not been performed, the information recording process along with the Verification process is performed (Step 107). The Step 107 is for the third type cartridge.

As described above, according to the cartridge of preferred embodiments of the present invention, under certain circumstances, the Verification process need not be performed while recording, even when a disc withdrawn from the second type of cartridge has been re-inserted into the drive without being received in the cartridge, i.e., as the bare disc, or when the disc used as bare disc is received into the cartridge (third type cartridge). More specifically, provided that the user eliminates the contaminants such as dirts, fingerprints, or the like according to the instructions suggested by the manufacturer before he inserts the disc into the cartridge case, and provided that he keeps a record of contaminants occurred while the disc was used as bare disc and left and eliminated in accordance with the defect managing method suggested in the Standard DVD-RAM specifications, the user can re-close the A1 sensor hole so that the information can be recorded on the disc without the Verification process. Accordingly, delay of information processing due to the unnecessary presence of the Verification process can be prevented.

As above, the A1 sesnor hole of the Standard DVD-RAM specifications has been described. However, a new sensor hole, or an A3 sensor hole which is defined by the Standard DVD-RAM specifications may be utilised. (The function of the A3 sensor hole is not specified in the Standard DVD-RAM specifications.) Employing the new sensor hole or the A3 sensor hole brings the advantage that the function of the A1 sensor hole for sensing the initial state of the cartridge is maintained, while the user can determine whether the disc can be used without the Verification process.

Hereinafter, an embodiment of cartridge employing a new sensor hole, i.e. the A3 sensor hole will be described in greater detail.

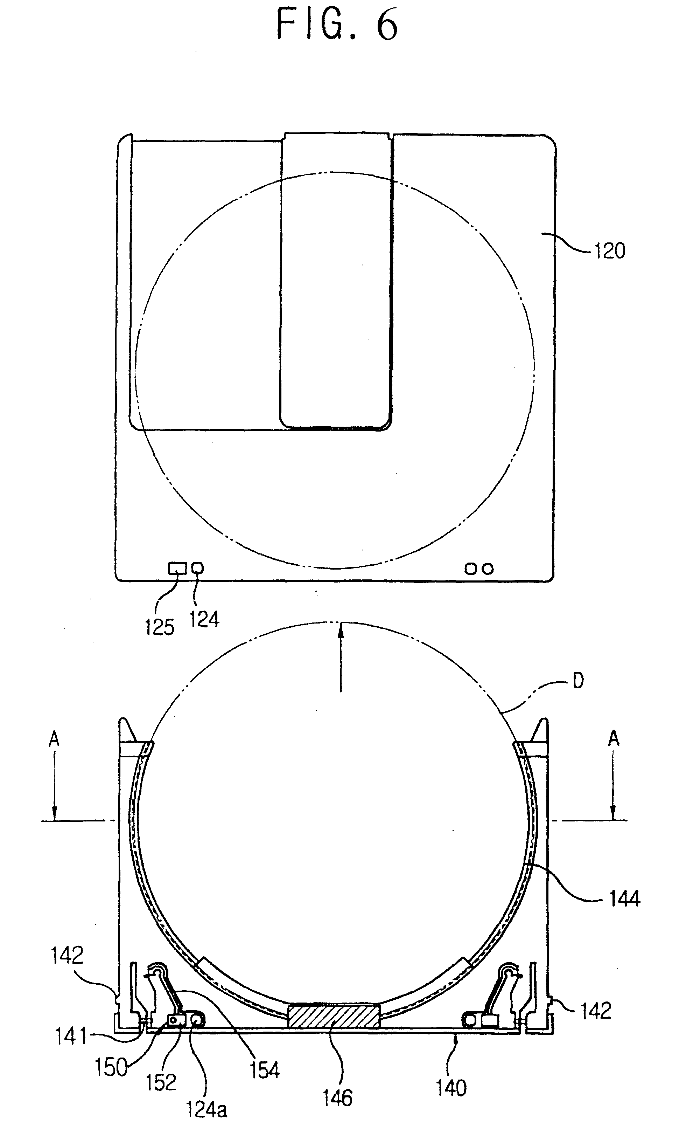

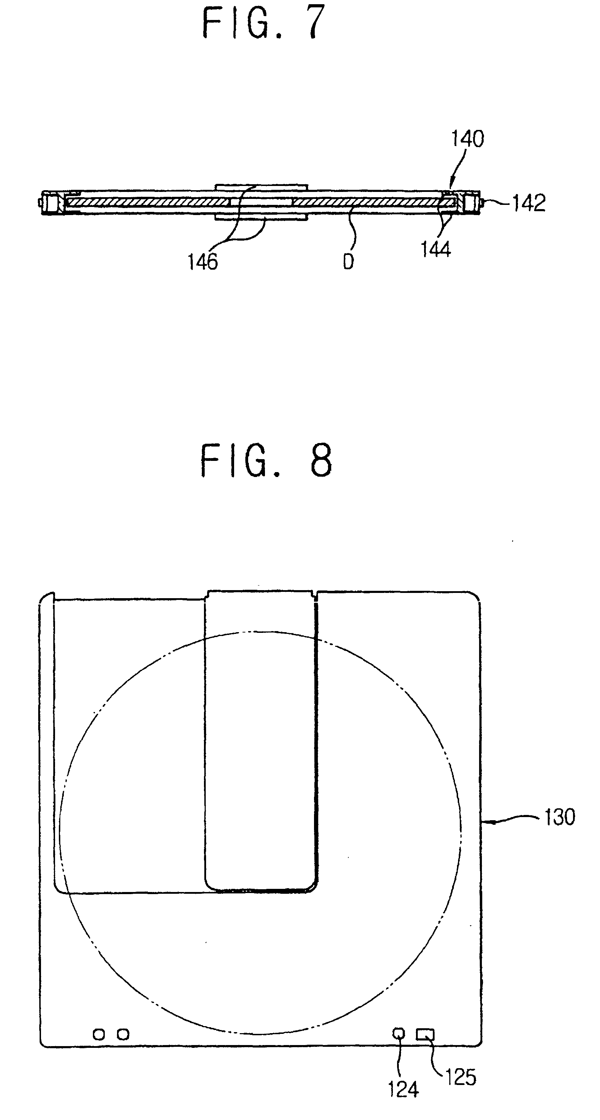

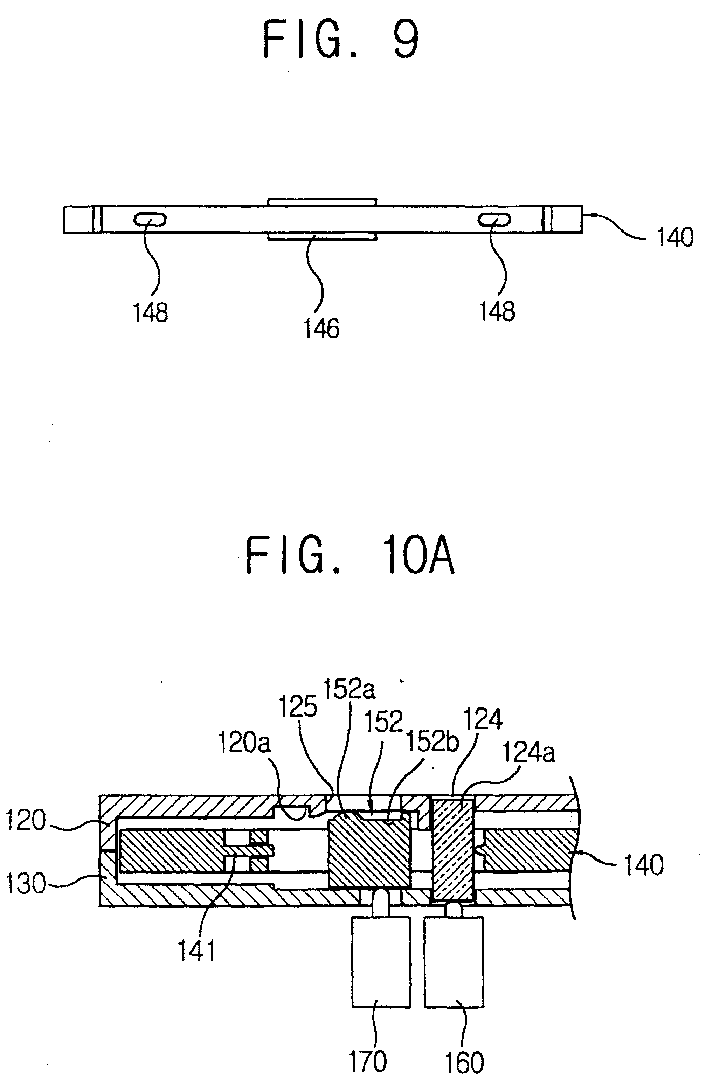

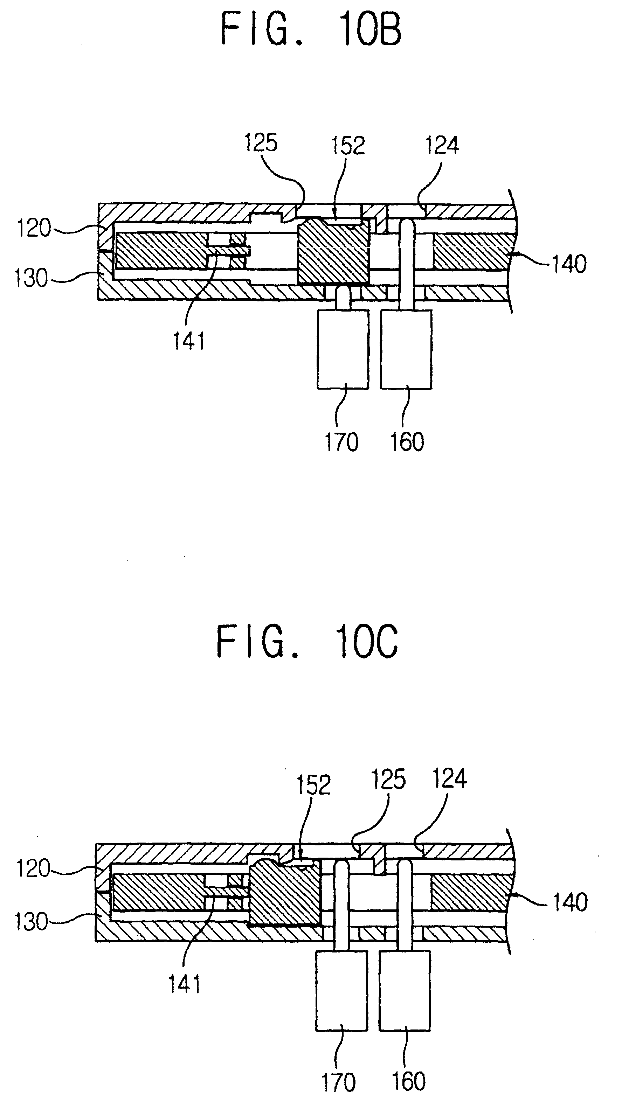

Figure 6 shows the cartridge having the A3 sensor hole to be opened/closed according to the second preferred embodiment of the present invention. Figure 7 is a sectional view taken along the line A-A of the cartridge of Figure 6 to show the opening cover, Figure 8 is a plan view of a lower shell of the cartridge of Figure 6, showing the sensor hole, and Figure 9 is a front elevation of the opening cover of the cartridge of Figure 6, showing the horizontal sensor hole. Figures 10A, 10B, and 10C are sectional views for showing the means for opening/closing the vertical sensor hole of the cartridge of Figure 6 operating.

Reference numerals 120 and 130 in the figures respectively denote an upper shell and a lower shell. 140 is an opening cover, and 150 is a sensor cover. Additionally, reference numeral 124 is an A1 sensor hole, and 125 is an A3 sensor hole.

The A1 and A3 sensor holes 124 and 125 are respectively defined through the upper and lower shells 120 and 130 of the cartridge case. The A1 sensor hole 124 has a circular shape, while the A3 sensor hole 125 has an rectangular or oval shape.

A tab 124a is disposed at the A1 sensor hole 124, breakable with the outside force. The tab 124a is not-recoverable once it is broken. Accordingly, the absence of the tab 124a indicates that the disc has been withdrawn from the cartridge.

The A3 sensor hole 125 is to be selectively opened/closed by the sensor lever 150. The sensor lever 150 has an opening/closing member 52 and a tension rib 154. The opening/closing member 152 is movably disposed between the close-position and the open-position of the A3 sensor hole 125, and the tension rib 154 supports the opening/closing member 152.

Here, the opening/closing member 152 is elastically supported by the tension rib 154 to maintain the closed-state of the A3 sensor hole 125. A locking projection 152a is formed at an upper side of the opening/closing member 152, while there formed a locking portion 120a corresponding to the locking projection 152a at the upper shell 120. Due to the presence of the locking projection 152a and the locking portion 120a, the opening/closing member 152 which is shifted to the open-position of A3 sensor hole 125 maintains the position thereof. Additionally, a recess 152b is formed at other upper side of the opening/closing member 152, to move the opening/closing member 152.

Further, a returning lever 141 is disposed at the opening cover 140 which is adjacent to the outer side of the opening/closing member 152. Subsequent to the opening movement of the opening cover 140, the returning lever 141 pulls the opening/closing member 152, thereby shifting the opening/closing member 152, which was moved to the open-position of the A3 sensor hole 125, to the close-position. Accordingly, when the opened opening cover 140 is closed again, the opening/closing member 152 is automatically returned to the close-position of the A3 sensor hole 125, which is the initial position of A3 sensor hole 125.

Meanwhile, the opening cover 140 is fixedly mounted to the cartridge case by a pair of locking projection parts 142 provided at both sides thereof which are locked with the locking recesses 111 provided at both sides of the cartridge case. The opening cover 140 is withdrawn from the cartridge case if the locking projection parts 142 at both sides thereof are pushed inward and pulled outside.

A guide rib 144 is disposed around the opening cover 140 to securely support the disc. Further, a label part 146 is formed at a front middle portion of the opening cover 140, so that characters or symbols can be written thereon. For example, the alphabet A and B can be written so as to denote each side of the disc. Accordingly, the errors such as disc turn-over is prevented.

Respectively, the A1 sensor hole, A3 sensor hole, and means for opening/closing sensor holes are symmetrically formed at both sides of the cartridge case. Like the general disc cartridge, the disc cartridge has a pair of positioning pins for determining the position of the cartridge inserted into the driver, and a recording-prevention sensor holes for preventing information deleting or overwriting. And since such elements are general elements for the disc cartridge, the further detailed depiction and description thereof will be omitted.

As described, the sensor holes 124 and 125 are respectively defined through the upper and the lower shells 120 and 130 of the cartridge. Additionally, as shown in Figure 9, horizontal sensor holes 148 are formed at front surfaces of the opening cover 140 in perpendicular relation with respect to the sensor holes 124 and 125, while intercommunicating with the sensor holes 124 and 125. Thus, both of the driver having vertical sensor switches as well as the driver having horizontal sensor switches can use the cartridge.

Hereinafter, the operation of the disc cartridge constructed as above will be described with respect to Figures 10A and 10C.

Figure 10A shows the state that the cartridge received with the new disc is inserted into the driver. As shown, the sensor holes 124 and 125 are in closed-state respectively by the tab 124a and the opening/closing member 152, and accordingly, the sensor switches 160 and 170 are not inserted into the sensor holes 124 and 125. In this case, it is determined that the disc is the new disc which has never been withdrawn from the cartridge, so that the recording process excluding the Verification process is performed.

Figure 10B shows the state when the disc in the cartridge case has been replaced. As shown in Figure 10B, the tab 124a which has been covering the A1 sensor hole 124 is eliminated. Thus, the sensor switch 160 of one side is inserted into the sensor hole 124. Thus, it is determined that the disc has been withdrawn from the cartridge case. Also, from the closing state of the A3 sensor hole, it is determined that there has been no proper process performed, so that the Verification process is performed while recording.

In this state, when the defects of the replaced disc are detected, the opening/closing member 152 is forcibly moved by the outside force to the open-position of the A3 sensor hole 125 as shown in Figure 10C. Then, the sensor switch 170 of the driver is inserted into the opened sensor hole 125, and accordingly, it is determined that the disc has been withdrawn from the cartridge case and there has been proper process performed. Thus, the recording is performed without the Verification process.

As described above, since the information is recorded while only the required process is performed, the information processing can be much more accelerated, in comparison with the conventional way in which the Verification process is unconditionally performed whenever the disc is replaced.

As above, the situation when the driver having vertical sensor switches is inserted into the cartridge having sensor hole to be opened/closed according to the present invention is described. The cartridge of embodiments of the present invention, however, can be employed into the driver which has horizontal sensor switches as well.

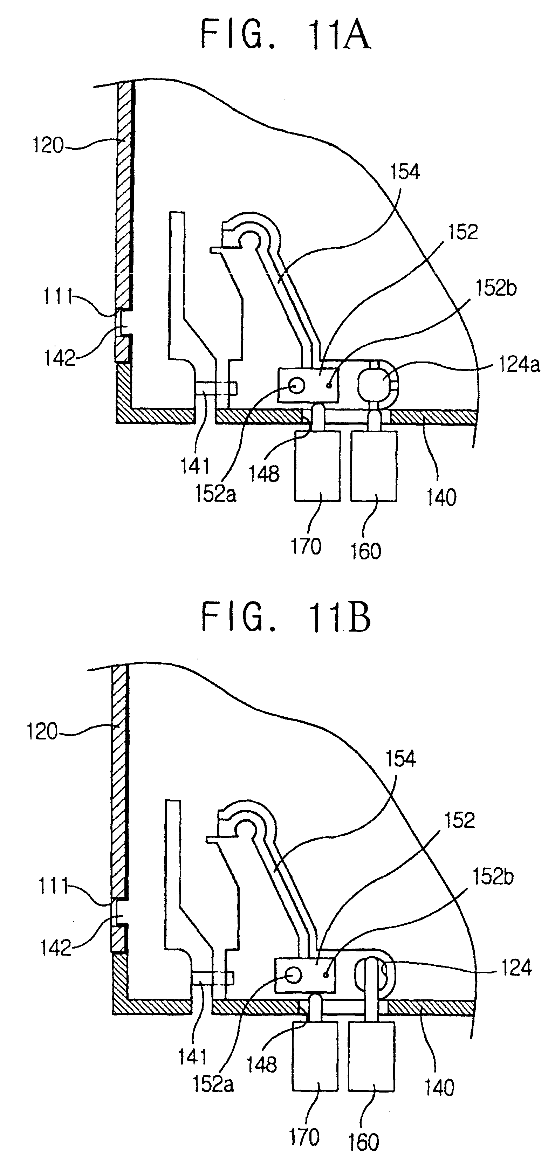

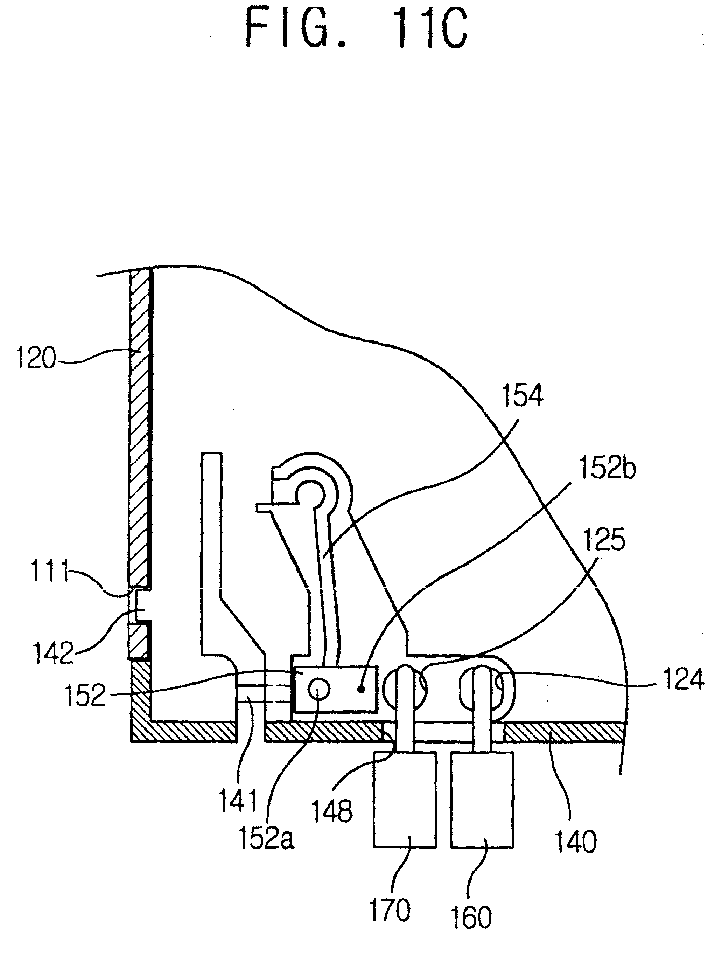

More specifically, the states of the disc can be sensed through the horizontal sensor holes 148 formed at front surfaces of the opening cover 140, and the same is shown in Figures 11A to 11C.

The states of the disc are sensed by the same operation with the one described above with respect to Figures 10A to Figure 10C, except for the fact that the sensor switches 160 and 170 of the driver is horizontally disposed, and inserted horizontally into the sensor holes 148 formed at front surface of the opening cover 140. Thus, the further detailed description will be omitted.

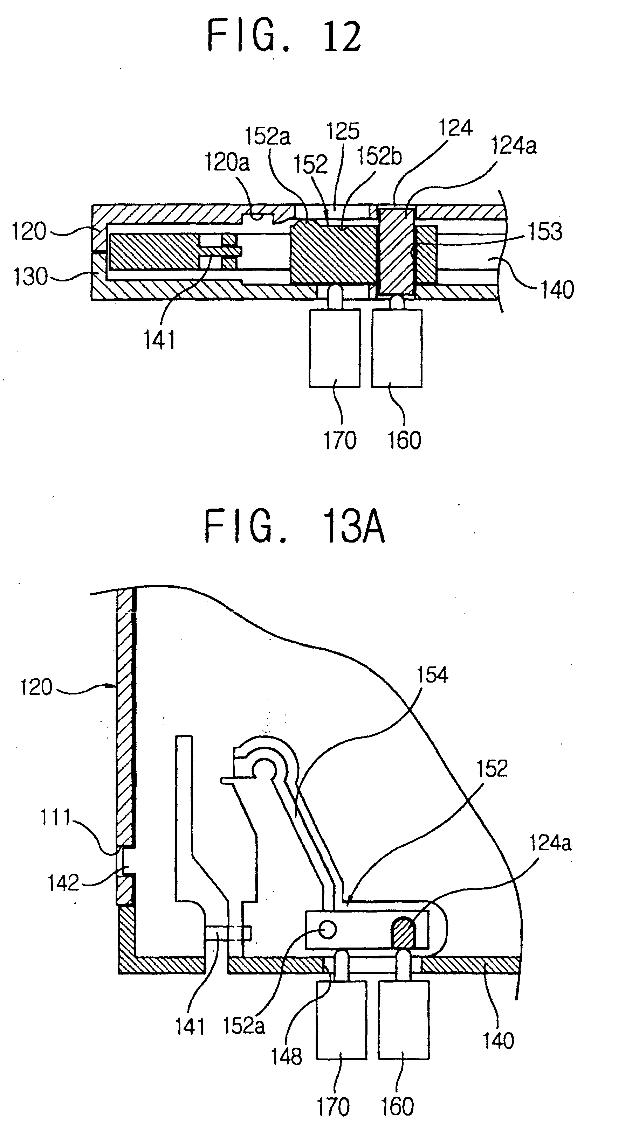

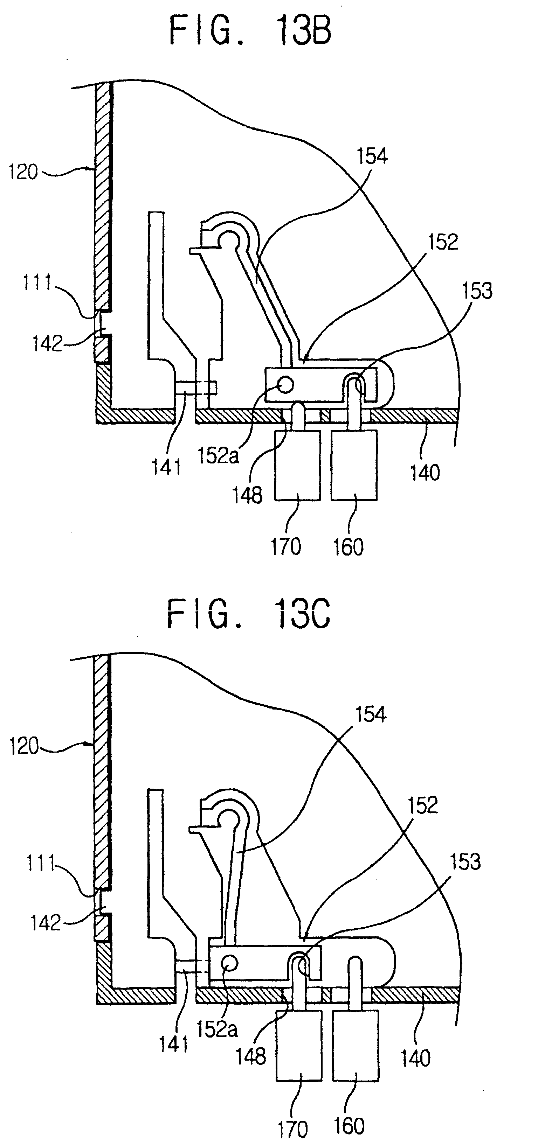

Figure 12 is a vertical sectional view showing a main portion of the cartridge having a sensor hole according to a third preferred embodiment of the present invention, and Figures 13A, 13B, and 13C are transverse sectional views for explaining a structure and operation of the means for opening/closing the sensor hole of Figure 12.

As shown in the figures, the basic structure of the cartridge is similar to that of the cartridge according to the second preferred embodiment of the present invention. Accordingly, like elements of the second preferred embodiment will be given the same reference numerals throughout the description of the third preferred embodiment. Also, the features which has been described will not be repeated, but the emphasis will be focused on the unique feature of the third preferred embodiment.

According to the third preferred embodiment of the present invention, the opening/closing member 152 movably disposed at the space of the opening cover 140 extends over the A1 sensor hole 124. An annular space 153 corresponding to the A1 sensor hole 124 is formed at the extended portion of the opening cover 152, and the tab 124a for covering the A1 sensor hole 124 is disposed within the annular space 153. An upper and a lower ends of the tab 124a are inserted into, thereby supported by the A1 sensor holes 124 of the upper and the lower shells 120 and 130. Accordingly, the opening/closing member 152 is moved only in absence of the tab 124a.

The operation of the means for opening/closing the sensor holes of the present embodiment is same with the ones described above with respect to Figures 13A to 13C. Thus, the further detailed description thereof will be omitted. The unique feature of the third preferred embodiment of the present invention is that the opening/closing member 152 is only moved and opens the A3 sensor hole 125 when the tab 124a covering the A1 sensor hole 124 is eliminated.

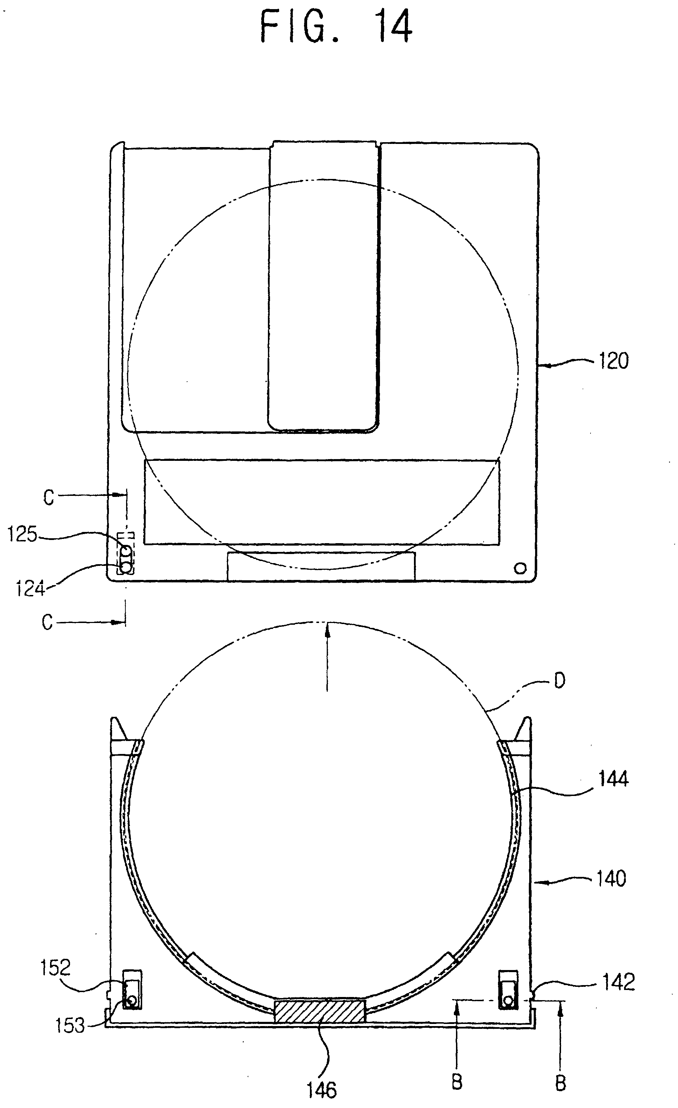

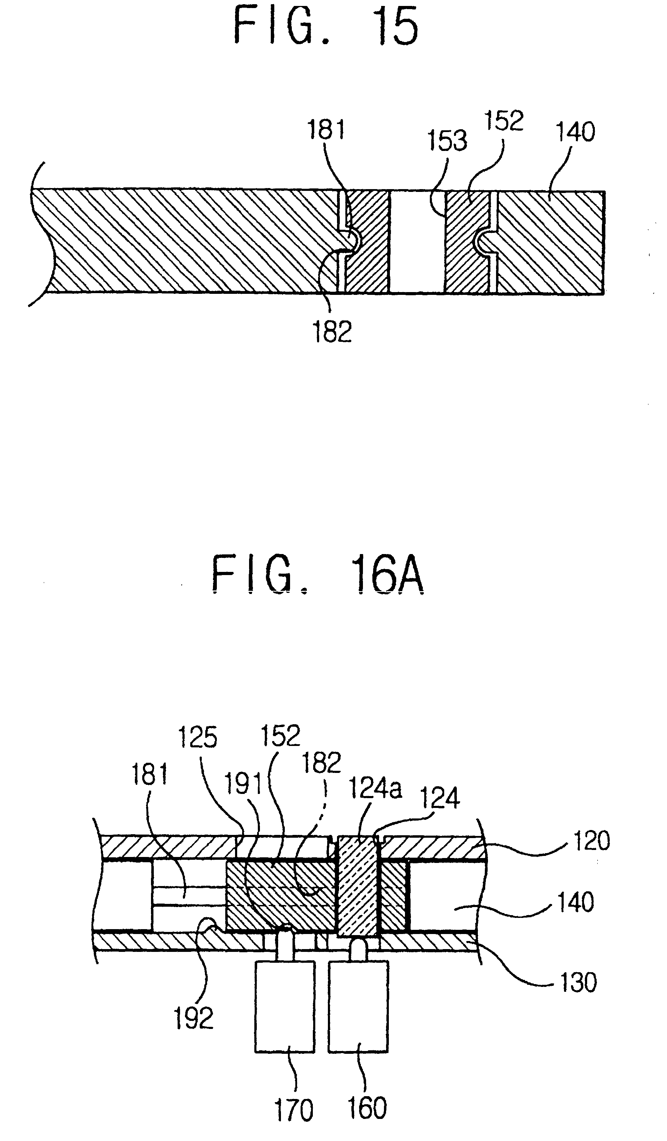

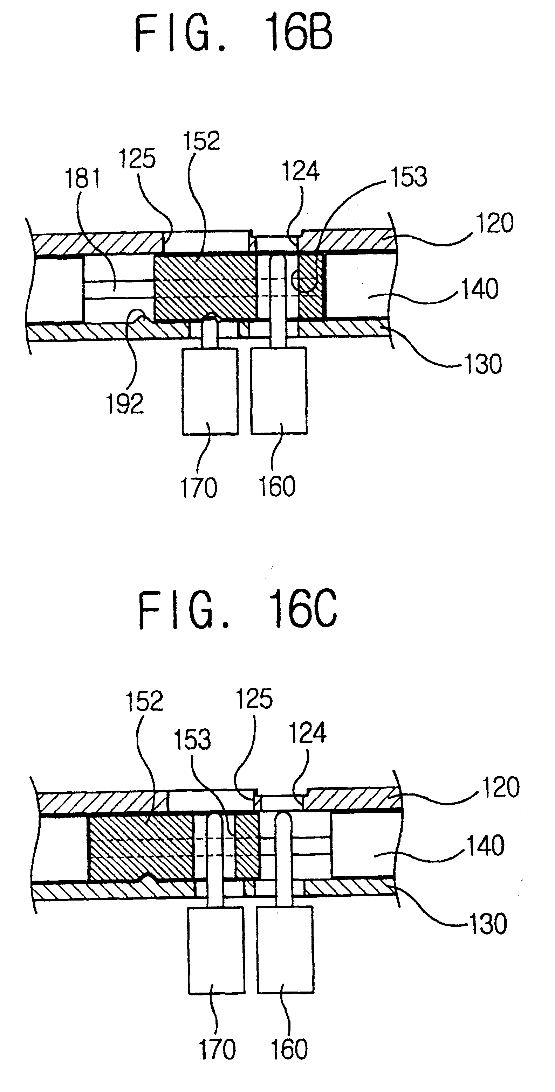

Figure 14 is a plan view showing the cartridge having sensor hole to be opened/closed according to a fourth preferred embodiment of the present invention, in which the opening cover is separated from the cartridge, Figure 15 is a sectional view taken along the line B-B of Figure 14, to show one example of opening/closing part of the cartridge of Figure 14, and Figures 16A, 16B, and 16C are sectional views taken along the line C-C of Figure 14, to explain the structure and operation of the means for opening/closing the sensor hole of the cartridge of Figure 14.

As shown in the figures, the basic structure of the cartridge according to the fourth preferred embodiment of the present invention is the same as the structure of the cartridge according to the second and third preferred embodiments. Accordingly, the like elements of the third preferred embodiment will be given the same reference numerals throughout the description of the fourth preferred embodiment, and the features once described above will not be repeated, but the emphasis will be focused on the unique feature of the fourth preferred embodiment.

According to the disc cartridge of the fourth preferred embodiment, the position of the sensor holes 124 and 125 differs from the position according to the second and third preferred embodiments. More specifically, while the sensor holes of the second and the third preferred embodiments are arranged in horizontal direction, the sensor holes of the fourth preferred embodiment are arranged in a vertical direction with respect to the cartridge case. The arrangement of the sensor hole does not vary the function thereof but the sensor holes are such arranged to meet the sensor switches of the driver.

The opening/closing member 152 movably disposed at the space of the opening cover 140 is slidably moved therein.

A pair of guide projections 181 are formed at both walls of the opening cover 140, which defines the space therebetween, and guide recesses 182 are formed at both side surfaces of the opening/closing member 152, to receive the guide projections 181. Accordingly, the opening/closing member 152 is moved within the space of the opening cover 140 forward and backward.

Additionally, a locking recess 191 is formed at a lower side of the opening/closing member 152, and a locking projection 192 is formed at a side of the lower shell 130, to be received into the locking recess and thereby locking the opening/closing member 152. Accordingly, the position of the opening/closing member 152 is maintained. Also, due to the locking recess 191 of the opening/closing member 152 and the locking projection of the lower shell 130, the opening/closing member 152 can be automatically returned to its initial position when the opening cover 140 is withdrawn from the cartridge case for disc replacement and inserted again thereto.

According to the fourth preferred embodiment of the present invention, the opening/closing member 152 extends over the position of A1 sensor hole 124, and an annular space 153 is defined at the extended portion of the opening/closing member 152. A tab 124 for covering the A1 sensor hole 124 is inserted into the annular space 153. The tab 124a is such disposed to be supported by either one of the upper or the lower shell 120 or 130. Accordingly, the opening/closing member 152 can be moved only in absence of the tab 124a.

Since the structure for moving the opening/closing member 152 of the fourth preferred embodiment is similar to the same of the third preferred embodiment, the further detailed description will be omitted.

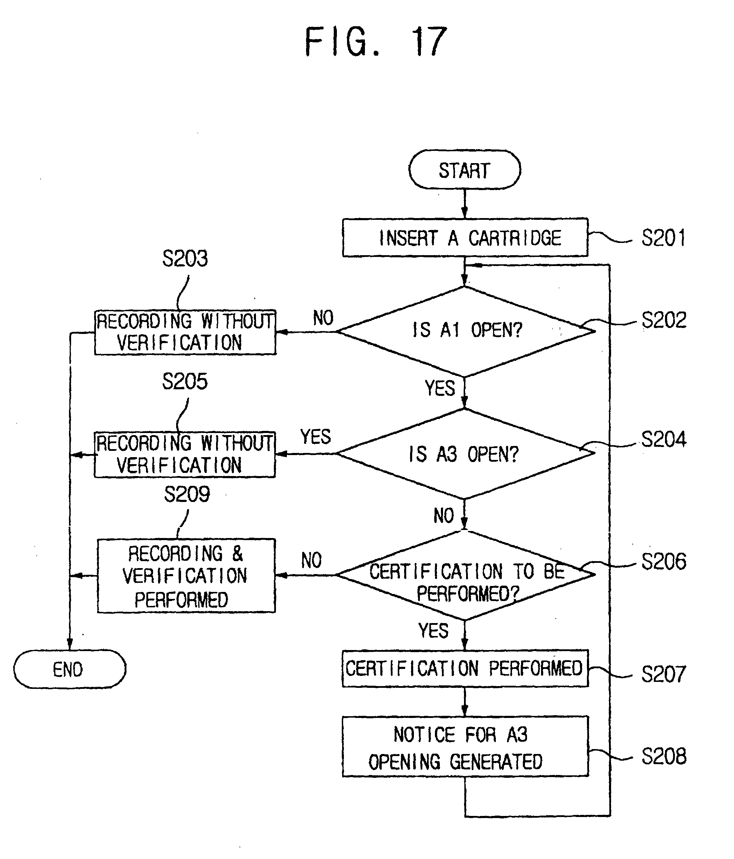

The opening/closing state of the sensor holes and the corresponding operation of the driver in the cartridge case having the A3 sensor hole are shown in below table 3, and Figure 17.

A method for driving a cartridge having an A3 sensor hole to be opened/closed will be described with respect to the Table 3 and Figure 17.

**[Table 3]**

| A1 hole | A3 hole | States of disc | Driver |
|---|---|---|---|
| Closed | - | Disc-never-withdrawn | Recording without Verification |
| Open | Closed | Disc never withdrawn and no proper process performed | Recording Verification required |
| Open | Open | Disc withdrawn and proper process performed (Defect check & Cleaning) | Recording without Verification |

The second and the third type cartridge whose disc has been withdrawn therefrom and returned thereto, is again inserted into the driver (Step 201). Then, open-state of the A1 sensor hole is determined (Step 202).

When the A1 sensor hole is in closed-state in Step 202, the recording process without the Verification is performed (Step 203). Otherwise, i.e., when the A1 sensor hole is in open-state, open-state of the A3 sensor hole is determined (Step 204).

When the A3 sensor hole is in open-state in Step 204, the recording process is performed without the Verification process (Step 205), or otherwise, i.e., when the A3 sensor hole is in closed-state, it is determined whether the Certification process is to be performed or not (Step 206).

When it is determined that the Certification is to be performed in Step 206, the Certification process is performed in accordance with the particular format suggested by the Standard DVD-RAM specifications. In such situation, not the Initialization in which the previously existed information is ignored, but the re-Certification process in which the previously existed information is maintained is performed (Step 207).

When the defects of the disc exceeds the predetermined extent, there may be an additional step of informing the user of such state and recommending for eliminating the contamination of the disc in proper way. Also, when it is determined that the cartridge inserted into the driver has the closed A3 sensor hole in Step 204, then the additional step of recommending the user for accelerating the information processing process by performing the re-Certification process, may be included.

Upon completion of the re-Certification process, the notice for opening the A3 sensor hole is informed to the user, since if A3 sensor hole is in open-state, no Verification process is required so that the information processing process is accelerated (Step 208). Accordingly, when the Step 205 is executed after positioning the A3 sensor hole to the open-position, the information recording is performed without the Verification process. Meanwhile, when it is determined in Step 206 that the Certification process is not required, the recording along with the Verification process is performed (Step 209).

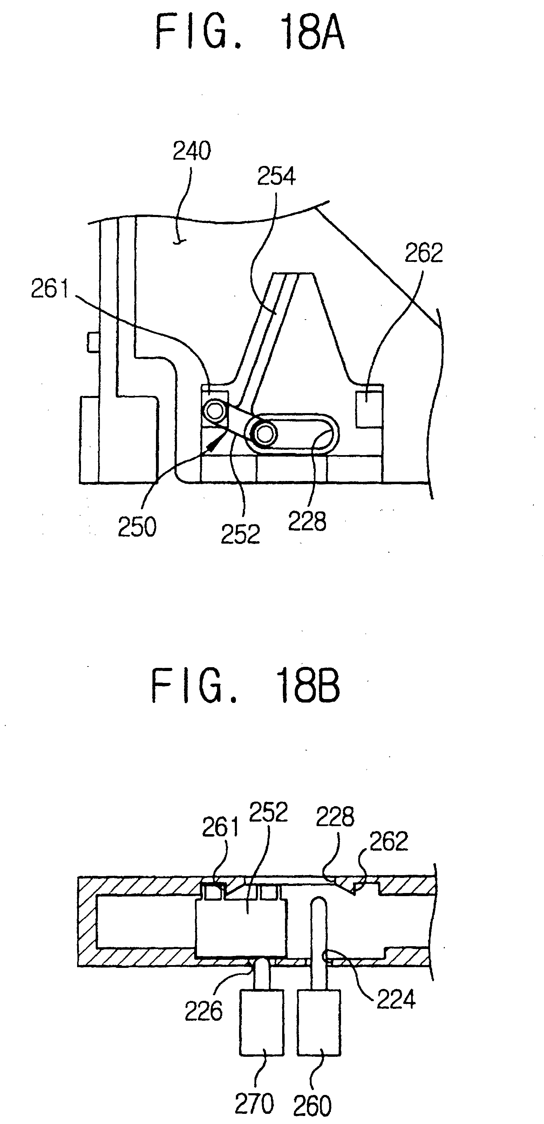

Figures 18, 19, and 20 respectively show the main structure and operation of the cartridge according to a fifth preferred embodiment of the present invention, having sensor hole to be opened/closed which is integrated with the recording-prevention sensor hole.

As shown in the figures, according to the fifth preferred embodiment, the recording-prevention sensor hole for prevent the information recording, and the sensor hole for sensing the opened state of the cartridge case are suggested. Here, the recording-prevention sensor hole as well as the sensor hole is controlled by the sensor lever so as to be opened/closed.

According to such structure for opening/closing the sensor holes, one sensor lever is moved to the recording-prevention position, or to indicate the opened state or inspected state of the cartridge while recording. Since the two sensor holes to be opened/closed are subsequently opened/closed by one sensor lever, the possible mis-operation is prevented, and embodiment itself is much simplified. As a result, the reliability thereof increases.

The structure for opening/closing the two sensor holes by one sensor lever has a sensor lever 250, locking portions 261 and 262, and an oval sensor hole 228. The sensor lever 250 has an opening/closing member 252 for covering both of adjacently formed sensor holes 224 and 226 and a tension rib 254 formed on the opening cover 240, which is for supporting the opening/closing member 252 and returning the opening/closing member 252 to the corresponding position when the opening/closing member 252 is opened/closed. The locking portions 261 and 262 are formed on the cartridge case to fixedly lock the sensor lever 250 when the sensor lever 250 is moved leftward and rightward. The oval sensor hole 228 is an integration of two sensor holes 224 and 226.

Reference numerals 260 and 270 in the figures denote the sensor switches.

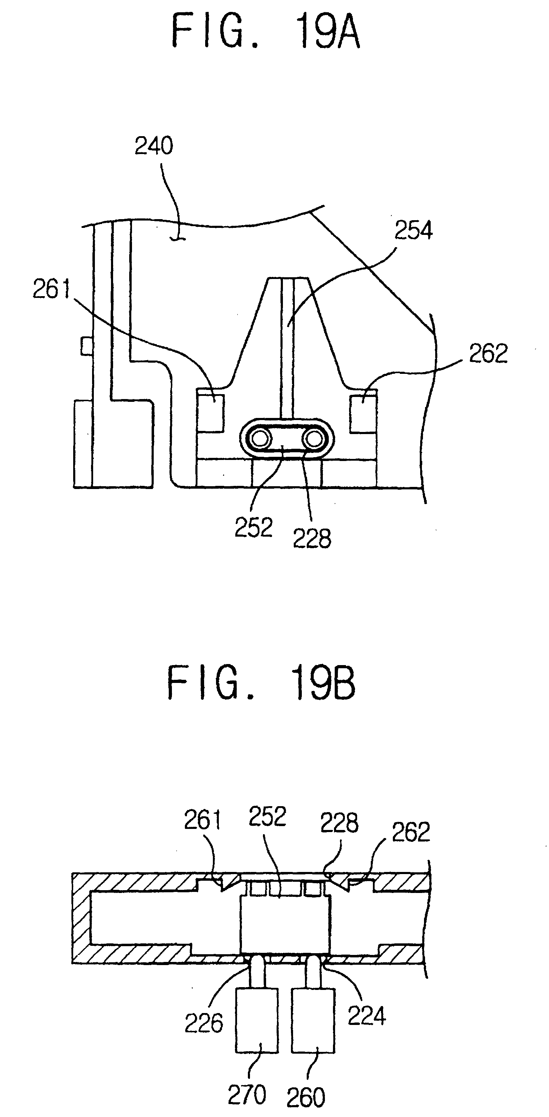

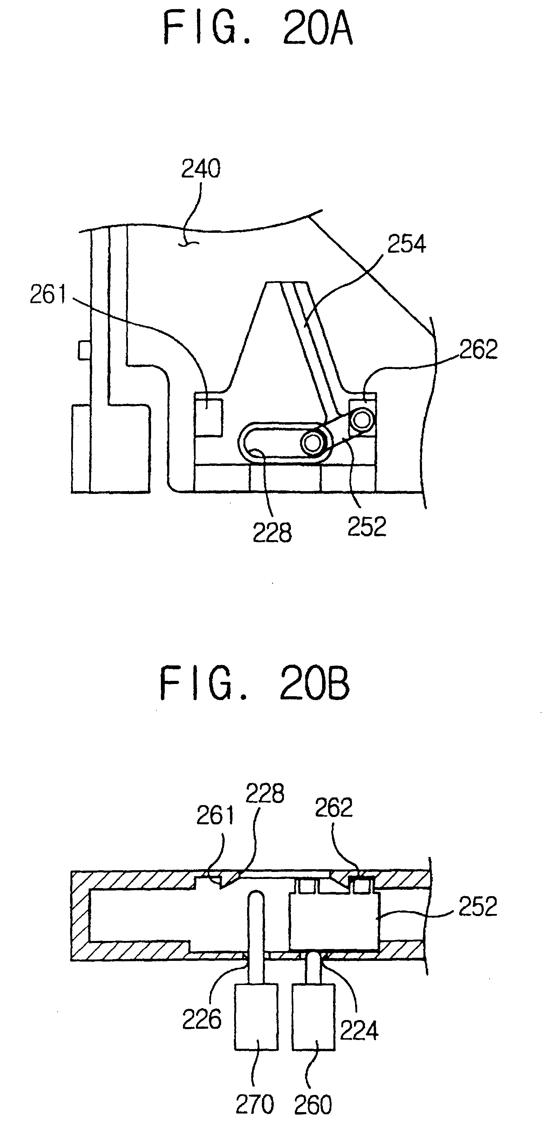

Figures 18A and 18B are plan view and side elevational view showing the cartridge having sensor hole integrated with the recording-prevention sensor hole according to the fifth preferred embodiment of the present invention, in which the recording-prevention sensor hole is in closed-state, Figures 19A and 19B are plan view and side elevational view for showing the recording-prevention sensor hole and the sensor hole of Figure 18 in closed-state, and Figures 20A and 20B are plan view and side elevational view for showing the sensor hole of Figure 18 in closed-state. The operation of the driver in accordance with the closing and open-states of the sensor holes are shown in the below Table 4.

**[Table 4]**

| Recording-prevention hole | Open-state sensor hole | Operation of driver |
|---|---|---|
| Open | Closed | Recording prevented |
| Closed | Open | Recording without Verification |
| | Closed | Recording Verification required when A1 is opened |

As shown in Figure 20, when the recording-prevention sensor hole 226 is in open-state, the recording is prevented, so that the information is not recorded. Thus, the recording is prevented regardless of states of the sensor hole 224 for sensing the open-state, and accordingly, there is no need to determine whether the Verification is required or not.

When the recording-prevention sensor hole 226 is in a closed-state, as shown in Figures 18 and 19, the opening-state sensor hole 224 can be either in open-state or in closed-state. Here, as shown in Figure 18, the recording is performed without the Verification process when the open-state sensor hole 224 is in open-state, while as shown in Figure 19, the information Verification is required when the open-state sensor hole 224 is in closed-state.

Meanwhile, when the two sensor holes are integrated according to the fifth preferred embodiment of the present invention, there may be A1 and A3 altogether and there may not. Also, there may be A1 sensor hole only.

Further, when the opening cover 240 of the cartridge case is open and closed, as shown in Figure 19, the sensor lever 25 is automatically returned to the middle-position by incorporating with the locking portions 261 and 262 of the cartridge case. Thus, when the opening cover is opened, it is automatically indicated that the recording Verification is required.

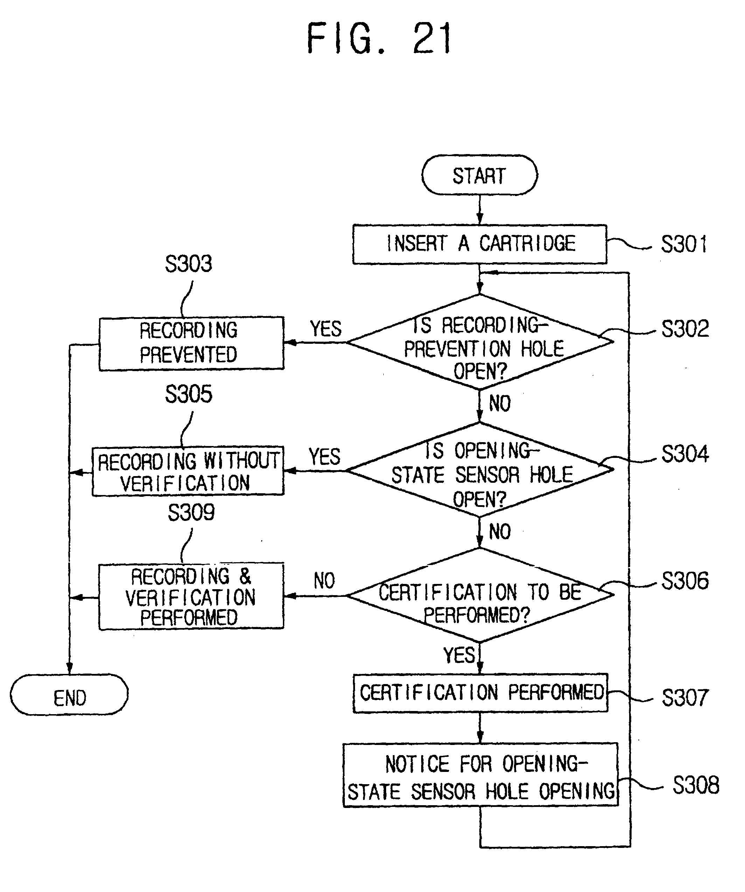

Figure 21 is a flow chart for explaining a method for driving the cartridge shown in Figures 18 to 20, which has the integrated recording-prevention sensor hole and the sensor hole. Hereinafter, the method for driving the cartridge according to the fifth preferred embodiment will be described in greater detail with respect to Figure 21.

The second or third type cartridge whose disc has been withdrawn and returned thereto is inserted into the driver (Step 301). Then, it is determined whether the recording-prevention sensor hole is in open-state or not (Step 302).

When the recording-prevention sensor hole is in open-state in Step 302, recording-prevention state is determined (Step 303), or otherwise, i.e., when the recording-prevention sensor hole is in closed-state, it is determined whether the opening-state sensor hole is in open-state or not (Step 304).

When the opening-state sensor hole is in open-state in Step 304, the information recording is performed without the Verification process (Step 305), or otherwise, i.e., when the opening-state sensor hole is in closed-state, then it is determined whether the Certification process for detecting the defects of the disc should be performed or not (Step 306).

When it is determined that the Certification process has to be performed in Step 206, the Certification process is performed in accordance with the particular format suggested by the Standard DVD-RAM specifications. In this case, not the initialization process in which the previously existed information is ignored, but the re-Certification process in which the previously existed information is maintained is performed (Step 307).

When the defected area detected in Step 307 exceeds the predetermined extent, it is informed to the user with a recommendation that he may eliminate the contamination of the disc in proper way. Also, in Step 304, when the cartridge inserted into the driver has the opening-state sensor hole which is closed, there may be an additional step of recommending the user that he may accelerate the information processing process by performing the re-Certification process.

Upon completion of the re-Certification process, the notice for opening the opening-state sensor hole is generated informing that the information processing process can be accelerated due to the absence of the Verification process if the open-state sensor hole is opened (Step 308). Accordingly, if the user shifts the opening-state sensor hole to the open-state and performs the Step 303, the recording is performed without the Verification process. Meanwhile, when it is determined in Step 306 that the Certification process is not required, then the recording process along with the Verification is performed (Step 309).

As described above, embodiments of the present invention provide cartridges having such a structure that a sensor hole is flexibly opened/closed. That is, when the opening cover is opened, the sensor hole is automatically shifted to the open-state to indicate such state, while upon completion of the Certification or re-Certification process, the sensor hole is shifted to the corresponding states. Accordingly, the error in recording is prevented even in absence of the Verification process, and the information processing process can be much accelerated.

While the present invention has been particularly shown and described with reference to the preferred embodiment thereof, it will be understood by those skilled in the art that various changes in form and details may be effected therein, the scope of the invention being defined by the appended claims.

## Claims

1. A cartridge comprising:
a cartridge case (10) for receiving a disc; and
at least one sensor hole (24, 125) for sensing whether the cartridge case (10) has been opened or not to withdraw or replace the disc within the cartridge case (10); **characterised in that** the cartridge further comprises
a means (50/150) for manually opening/closing the sensor hole (24, 125) after return of the disc to the cartridge case (10) according to whether the disc is in a cartridge opened state of a post certification and/or recertification state.

2. The cartridge as claimed in claim 1, wherein the disc is a double-side disc, and the sensor hole (24, 125) is corresponding to both sides of the disc, for sensing whether the disc has been withdrawn from the cartridge case (10) or not.

3. The cartridge as claimed in claim 1 or claim 2, wherein an opening cover (40, 140) is provided separably mounted to a rear side of the cartridge case (10), for supporting the disc to be withdrawn/received from/into the cartridge case (10) and, wherein a sensor lever (50, 150) is provided having an opening/closing member (52, 152) disposed at the sensor hole (24, 125), for controlling opening/closing of the sensor hole (24, 125) in accordance with the certification status of the disc, and a tension part (54, 154) is provided extending over a side of the sensor lever (50, 150) to be in contact with an inner side surface of the cartridge case, for giving a tension of predetermined degree toward the sensor lever (50, 150), and for positioning the opening/closing member (52, 152) of the sensor lever toward the open-position of the sensor hole (24, 125) when the opening cover (40, 140) is opened.

4. The cartridge as claimed in claim 3, wherein the opening/closing member (52, 152) positioned at the close-position of the sensor hole (24, 125) is moved to the open-position and maintains the open-state of the sensor hole (24, 125) when the opening cover (40, 140) is opened.

5. The cartridge as claimed in claim 4 or 5, further comprising a locker (44) for supportably preventing the opening/closing member (52, 152) from being returned to the open-state by the returning tension of the tension part (54, 154) of the sensor lever (50, 150) once the opening/closing member (52, 152) is shifted from the open-position to the close-position by outside force exceeding a predetermined extent.

6. A cartridge as claimed in claim 1 or claim 2, wherein there is provided:
an opening cover (40) separably mounted to a rear side of the case, for supporting the disc to be withdrawn/received from/into the cartridge case; and
an A1 sensor hole (124) never to be opened/closed, for determining whether the disc has been withdrawn from the cartridge case or not, the sensor hole (125) for sensing whether the disc has been withdrawn from the cartridge case or not comprising a second sensor hole (125) in co-operation with which the means (150) for opening/closing in accordance with the states of the disc operates.

7. The cartridge as claimed in claim 6, wherein the opening cover (140) has a horizontal sensor hole (148) in addition to the A1 sensor hole and the second sensor hole, which holes are defined through the upper and lower portions of the cartridge case, to be used in a driver having a vertical sensor switch as well as in a driver having a horizontal sensor switch.

8. The cartridge as claimed in claim 6 or 7, wherein the second sensor hole (125) comprises an A3 sensor hole suggested by Standard DVD-RAM specifications.

9. The cartridge as claimed in claim 8, wherein the means for opening/closing the sensor hole comprises:
an opening/closing member (152) movably disposed on the opening cover (140) corresponding to the A3 sensor hole (125), to be moved toward close-position and toward open-position of the A3 sensor hole (125), for selectively opening the A3 sensor hole (125);
a tension rib (154) for elastically supporting the opening/closing member (152) to maintain the position of the opening/closing member (152) at the A3 sensor hole (125) close-position; and
a locking means (120a, 152a) for maintaining the position of the opening/closing member (150) which has been moved to the open-position of the A3 sensor hole (125).

10. The cartridge as claimed in claim 9, wherein the locking means (120a, 152a) comprises:
a locking projection (152a) protruded from an upper side surface of the opening/closing member (140); and
a locking portion (120a) formed at an inner side of the cartridge case, while being corresponding to the locking projection (152a), wherein a recess (152b) is formed at other side of the opening/closing member (152), to move the opening/closing member (152).

11. The cartridge as claimed in claim 9 or 10 further comprising a returning lever for pushing the opening/closing member (152) which has been moved to the open-position of the A3 sensor hole (125) and for returning the opening/closing member (152) to the close-position, in subsequent to the opening movement of the opening cover (140).

12. The cartridge as claimed in claim 9, 10 or 11, wherein the opening/closing member (152) extends over to the position of the A1 sensor hole (124), a space corresponding to the A1 sensor hole (124) is formed at the space, a tab (124a) is supportably disposed either within an inner circumference of the space or at the cartridge case while covering the A1 sensor hole (124), and the opening/closing member (152) is not moved in presence of the tab (124a).

13. The cartridge as claimed in claim 12, wherein the A3 sensor hole (125) is always in closed-state when the A1 sensor hole (124) is in closed-state, and the A3 sensor hole (125) is either in closed-state or open-state when the A1 sensor hole (124) is in open-state, wherein the closed-state of the A3 sensor hole (125) indicates a verification process is required while recording, while the open-state of the A3 sensor hole (125) indicates no need for the verification process while recording.

14. The cartridge as claimed in claim 8, wherein the means (150) for opening/closing the sensor hole (125) comprises:
an opening/closing member (152) slidably disposed on the opening cover (140) corresponding to the A3 sensor hole (125), to be moved to the close-position and to the open-position of the A3 sensor hole (125), for selectively opening the A3 sensor hole (125);
a means (181) for guiding the movement of the opening/closing member (152); and
a locking means (191, 192) for maintaining the position of the opening/closing member (152) which has been moved to the open-position of the A3 sensor hole (125).

15. The cartridge as claimed in claim 14, wherein the opening/closing member (152) extends over to the position of the A1 sensor hole (124), a space is defined at the extend portion of the opening/closing member (152), a tab (124a) is supportably disposed either within an inner circumference of the space or at the cartridge case while covering the A1 sensor hole (124), and the opening/closing member (152) is not moved in presence of the tab (124a).

16. The cartridge as claimed in claim 14, wherein the opening/closing member (152) is automatically returned to the close-position of the A3 sensor hole (125) when the opening cover (140) which was opened is closed.

17. The cartridge as claimed in claim 8, wherein the second sensor hole (125) is an A3 sensor hole (125) suggested by Standard DVD-RAM specifications, in a condition that the A3 sensor hole (125) is positioned adjacently to a recording-prevention sensor hole (26), to allow subsequent open/close of the A3 sensor hole (125) and the recording-prevention sensor hole (26).

18. The cartridge as claimed in claim 17, wherein the means (152) for opening/closing the sensor hole (125) comprises:
a left and right locking projections (120a, 152a) adjacently formed to respective outer side ends of the A3 sensor hole (125) and the recording-prevention sensor hole (26) formed on the cartridge case; and
a sensor lever (150) for controlling one of two sensor hole (124, 125) to the closed-state by means of the corresponding locking projection, and in absence of tension, for controlling both of the sensor holes (124, 125) to closed-state by being positioned at the middle.

19. The cartridge as claimed in claim 18, wherein the sensor lever (150) comprises:
an opening/closing member (152) for covering both of the A3 sensor hole (125) and the recording-prevention sensor hole (26) which are adjacently positioned; and
a tension lever (141) disposed on the opening cover (140), for supporting the opening/closing member (152), and for allowing the returning of the opening/closing member (152) to the corresponding position while opening/closing of the opening/closing member (152).

20. The cartridge as claimed in claim 18, wherein the sensor lever (150) is automatically returned to the middle position when the opening cover (140) which was open is closed.

21. The cartridge as claimed in any of claims 17 to 20, wherein the A3 sensor hole (125) does not effect recording process when the recording-prevention sensor hole (26) is in open-state, while the A3 sensor hole (125) may be either in closed-state or open-state when the recording-prevention sensor hole (26) is in closed-state, and closed-state of the A3 sensor hole (125) indicates the verification process is required while recording, while the open-state of the A3 sensor hole (125) indicates no need for the verification process while recording.

22. A cartridge according to claim 1, in which:
an opening cover (40, 140) is provided separably mounted to a rear side of the cartridge case (10), for supporting the disc to be withdrawn/received from/into the cartridge case (10);
said at least one sensor hole (24, 124, 125) comprise: an oval sensor hole (24. 125); an integration of recording-prevention sensor hole (26); and a sensor hole (124), for indicating whether the disc has been withdrawn from the cartridge case or not;
left and right locking projections (120a, 152a) are provided adjacently formed to both sides of the oval sensor hole (24, 125); and
a sensor lever (150) is provided for controlling one of two sensor holes (24, 125) to the closed-state by means of corresponding locking projection, and for controlling both of two sensor holes to the closed-state while being positioned at the middle.

23. The cartridge as claimed in claim 22, wherein the sensor lever (150) comprises:
an opening/closing member (152) for covering both of the A3 sensor hole (125) and the recording-prevention sensor hole (26) which are adjacently positioned;
a tension rib (154) disposed on the opening cover (140), for allowing returning of the opening/closing member (152) while opening/closing of the opening/closing member (152).

24. The cartridge as claimed in claim 22 or 23, wherein the sensor lever (150) is automatically returned to the middle position when the opening cover (140) which was opened is closed.

25. The cartridge as claimed in claim 22, 23 or 24, wherein the A3 sensor hole (125) does not effect recording process when the recording-prevention sensor hole (26) is in open-state, while the A3 sensor hole (125) may be either in closed-state or in open-state when the recording-prevention sensor hole (26) is in closed-state, and the closed-state of the A3 sensor hole (125) indicates that verification process is required while recording, while the open-state of the A3 sensor hole (125) indicates no need for the verification process while recording.

26. A method for driving a cartridge having a sensor hole (24, 125) to be opened/closed, wherein the method comprises steps of:
(a) determining whether the sensor hole (24, 125) of an inserted cartridge case is in a first state, indicating that the cartridge case has been opened to withdraw or replace the disc within the cartridge case
(b) performing a certification process when the sensor hole (24, 125) is in the first state; and **characterised by**
(c) manually controlling the sensor hole (24, 125) upon completion of the certification process, to set the sensor hole (24, 125) to a post-certification and/or recertification state.

27. The method as claimed in claim 26, wherein the step (c) is followed by an additional step (d) of recording information without verification process.

28. The method as claimed in claim 26 or 27 further comprises an additional step (e) of recording the information through the verification process without the certification process when the sensor hole is in the first state.

29. The method as claimed in claim 26, 27 or 28, wherein the step (a) further comprises:
a step (a1) of recommendably informing the user that he may accelerate the information processing process by setting the sensor hole of the inserted cartridge at the first state and performing the certification process.

30. The method as claimed in claim 26, 27, 28 or 29, wherein the step (b) further comprises:
a step (b1) of informing the user for performing the certification process while maintaining previously existed information, along with a recommendation for disc cleaning when there are defects exceeding a predetermined extent.

31. The method as claimed in any of claims 26 to 30, wherein the step (c) further comprises;
a step (c1) of recommendably informing the user that he may accelerate the information processing process by setting the sensor hole to the inspected state and not performing the verification process.

32. The method as claimed in claim 31, wherein the inspected state is a second state in which the sensor hole (24, 125) senses that the disc has never been withdrawn from the cartridge.

33. The method as claimed in claim 32, wherein, provided that the sensor hole (24) is an A1 sensor hole (24) suggested by Standard DVD-RAM specifications, the first state is the open-state of the sensor hole (24), while the second state is the closed-state of the sensor hole (24).

34. The method as claimed in claim 32, wherein, provided that the sensor hole is an A3 sensor hole (125) suggested by Standard DVD-RAM specifications, the first state is the closed-state of the sensor hole (125), while the second state is the open-state of the sensor hole (125).

35. The method as claimed in claim 32, wherein, provided that the sensor hole includes the A1 sensor hole (24) which is never to be opened/closed and for indicating that the disc has been withdrawn from the cartridge case or not, the first state is the closed-state, while the second state is the open-state.

36. The method as claimed in claim 32, wherein, provided that the sensor hole is the sensor hole adjacently positioned to the recording-prevention sensor hole and controlled with opening/closing thereof by one sensor lever (150), the first state is the closed-state, and the second state is the open-state.

37. The method as claimed in claim 36 further comprises a step (f) of preferentially preventing the recording, giving a priority to the open-state of the recording-prevention sensor hole (24, 125) to the sensor hole (24, 125).

## Patentansprüche

1. Kassette, enthaltend:
ein Kassettengehäuse (10) zum Aufnehmen einer Platte; und
zumindest eine Sensoröffnung (24, 125) zum Erfassen, ob das Kassettengehäuse (10) zum Herausnehmen oder Ersetzen der Platte in dem Kassettengehäuse (10) geöffnet ist oder nicht; **dadurch gekennzeichnet, dass** die Kassette ferner enthält:
eine Vorrichtung (50/150 für das manuelle Öffnen/Schließen der Sensoröffnung (24, 125) nach dem Rückführen der Platte zu dem Kassettengehäuse (10) im Hinblick darauf, ob die Platte in einem Kassettengeöffneten Zustand für eine nachgeordnete Zertifikation und/oder einem Zustand für eine erneute Zertifikation vorliegt.

2. Kassette nach Anspruch 1, wobei die Platte eine doppelseitige Platte ist, und die Sensoröffnung (24, 125) beiden Seiten der Platte entspricht, zum Erfassen, ob die Platte aus dem Kassettengehäuse (10) entnommen wurde oder nicht.

3. Kassette nach Anspruch 1 oder Anspruch 2, wobei eine Öffnungsabdeckung (40, 140) vorgesehen ist, separat montiert an der Rückseite des Kassettengehäuses (10), zum Unterstützen der Platte, die aus dem Kassettengehäuse (10) herauszuziehen oder von diesem aufgenommen wird, und wobei ein Sensorhebel (50, 150) vorgesehen ist, mit einem Öffnungs-/Schließelement (52, 152), angeordnet bei der Sensoröffnung (24, 125), zum Steuern des Öffnens/Schließens der Strömung (24, 125) in Übereinstimmung mit dem Zertifikationsstatus der Platte, und ein Spannungsteil (54, 154) vorgesehen ist, sich erstreckend über eine Seite des Sensorhebels (50, 150) für einen Kontakt mit der Innenseitenoberfläche des Kassettengehäuses, zum Vorgeben einer Spannung vorgegebenen Umfangs zu dem Sensorhebel (50, 150), sowie zum Positionieren des Öffnungs-/Schließelements (52, 152) des Sensorhebels zu der Öffnungsposition der Strömung (24, 125), wenn die Öffnungsabdeckung (40, 140) geöffnet ist.

4. Kassette nach Anspruch 3, wobei das Öffnungs-/Schließelement (52, 152), positioniert bei der Schließposition der Sensoröffnung (24, 125), zu der Öffnungsposition bewegt wird und den geöffneten Zustand der Sensoröffnung (24, 125) dann beibehält, wenn die Öffnungsabdeckung (40, 140) geöffnet ist.

5. Kassette nach Anspruch 4 oder 5, ferner enthaltend einen Verriegler (44), um unterstützend das Rückführen des Öffnungs-/Schließelements (52, 152) zu dem Öffnungszustand zu vermeiden, durch die Rückführspannung des Spannungsteils (54, 154) des Sensorhebels (50, 150), sobald das Öffnungs-/Schließelement (52, 152) von der Öffnungsposition zu der Schließposition verschoben ist, durch eine auswärtige Kraft, die einen vorgegebenen Umfang übersteigt.

6. Kassette nach Anspruch 1 oder Anspruch 2, wobei vorgesehen ist:
eine Öffnungsabdeckung (40), getrennt an der Rückseite des Gehäuses montiert, zum Halten der Platte, die aus dem Kassettengehäuse zu entnehmen bzw. von diesem aufzunehmen ist; und
eine A1 Sensoröffnung (124), die niemals zu öffen/schließen ist, zum Bestimmen, ob die Platte aus dem Kassettengehäuse herausgezogen wurde oder nicht,
wobei die Sensoröffnung (125) zum Erfassen dient, ob die Platte von dem Kassettengehäuse herausgenommen wurde oder nicht, mit einer zweiten Sensoröffnung (125) in Wechselwirkung mit der Vorrichtung (150) zum Öffnen/Schließen in Übereinstimmung mit den Zuständen, gemäß denen die Platte betätigt ist.

7. Kassette nach Anspruch 5, wobei die Öffnungsabdeckung (140) eine horizontale Sensoröffnung (148) zusätzlich zu der A1 Sensoröffnung und der zweiten Sensoröffnung aufweist, und wobei die Öffnungen durch die oberen und unteren Abschnitte des Kassettengehäuses definiert sind, für die Anwendung in einem Treiber mit einem vertikalen Sensorschalter sowie einem Treiber mit einem horizontalen Sensorschalter.

8. Kassette nach Anspruch 6 oder 7, wobei die zweite Sensoröffnung (125) eine A3 Sensoröffnung enthält, vorgeschlagen gemäß dem Standard der DVD-RAM Spezifikationen.

9. Kassette nach Anspruch 8, wobei die Vorrichtung zum Öffnen/Schließen der Sensoröffnung enthält:
ein Öffnungs-/Schließelement (152), beweglich an der Öffnungsabdeckung (140) gemäß der A3 Sensoröffnung (125) angeordnet, für eine Bewegung zu der Schließposition und
zu der Öffnungsposition der A3 Sensoröffnung (125), zum selektiven Öffnen der A3 Sensoröffnung (125) ;
eine Spannungsrippe (154) zum elastischen Halten des Öffnungs-/Schließelements (152) zum Halten der Position des Öffnungs-/Schließelements (152) bei der A3 Sensoröffnung (125) in der geschlossenen Position; und
eine Verriegelungsvorrichtung (120a, 152a) zum Halten der Position des Öffnungs-/Schließelements (150), das zu der Öffnungsposition der A3 Sensoröffnung (125) bewegt wurde.

10. Kassette nach Anspruch 9, wobei die Verriegelungsvorrichtung (120a, 152a) enthält:
einen Verriegelungsvorsprung (152a), vorstehend von einer oberen Seitenoberfläche des Öffnungs-/Schließelements (140); und
einen Verriegelungsabschnitt (120a), gebildet bei der Innenseite des Kassettengehäuses, während einer Zuordnung zu dem Verriegelungsvorprung (152a), wobei eine Vertiefung (152) bei der anderen Seite des Öffnungs-/Schließelements (152) gebildet ist, zum Bewegen des Öffnungs-/Schließelements (152).

11. Kassette nach Anspruch 9 oder 10, ferner enthaltend einen Rückführhebel zum Schieben des Öffnungs-/Schließelements (152), das zu der Öffnungsposition der A3 Sensoröffnung (152) bewegt wurde, und zum Rückführen des Öffnungs-/Schließelements (152) zu der Schließposition, nachfolgend zu der Öffnungsbewegung der Öffnungsabdeckung (140).

12. Kassette nach Anspruch 9, 10 oder 11, wobei sich das Öffnungs-/Schließelement (152) zu der Position der A1 Sensoröffnung (124) hinüber erstreckt, ein Raum gemäß der A1 Sensoröffnung (124) bei dem Raum gebildet wird, ein Abgriff stützend entweder an dem Innenumfang des Raums oder bei dem Kassettengehäuse angeordnet ist, während eine Abdeckung der A1 Sensoröffnung (124), und das Öffnungs-/Schließelement (152) bei Vorliegen des Abgriffs (124a) nicht bewegt wird.

13. Kassette nach Anspruch 12, wobei die A3 Sensoröffnung (125) immer im geschlossenen Zustand vorliegt, wenn die A1 Sensoröffnung (124) in einem geschlossenen Zustand vorliegt, und die A3 Sensoröffnung (125) entweder in dem geschlossenen Zustand oder in einem geöffneten Zustand vorliegt, wobei der geschlossene Zustand der A3 Sensoröffnung (125) das Erfordernis eines Verifikationsprozesses während einer Aufzeichnung anzeigt, während der geöffnete Zustand der A3 Sensoröffnung (125) anzeigt, dass keine Anforderung für den Verifikationsprozess während dem Aufzeichnen besteht.

14. Kassette nach Anspruch 8, wobei die Vorrichtung (150) zum Öffnen/Schließen der Sensoröffnung (125) enthält:
ein Öffnungs-/Schließelement (152), gleitfähig an der Öffnungsabdeckung (140) angeordnet, gemäß der A3 Sensoröffnung (125), für ein Bewegen zu der geschlossene Position und zu der geöffneten Position der A3 Sensoröffnung (125), für ein selektives Öffnen der A3 Sensoröffnung (125);
eine Vorrichtung (181) zum Gleiten der Bewegung des Öffnungs-/Schließelements (152); und
eine Verriegelungsvorrichtung (191, 192) zum Beibehalten der Position des Öffnungs-/Schließelements (152), das zu der Öffnungsposition der A3 Sensoröffnung (125) bewegt wurde.

15. Kassette nach Anspruch 14, wobei das Öffnungs-/Schließelement (152) sich zu der Position der A1 Sensoröffnung (124) hinüber erstreckt, ein Raum bei der Erstreckungsposition des Öffnungs-/Schließelements (152) definiert ist, ein Abgriff (124a) haltend entweder in einem Innenumfang des Raums oder bei dem Kassettengehäuse angeordnet ist, während eine Abdeckung der A1 Sensoröffnung (124), und das Öffnungs-/Schließelement (125) nicht bei Vorliegen es Abgriffs (124a) bewegt wird.

16. Kassette nach Anspruch 14, wobei das Öffnungs-/Schließelement (152) automatisch zu der Schließposition der A3 Sensoröffnung (125) rückgeführt wird, wenn die geöffnete Öffnungsabdeckung (140) geschlossen wird.

17. Kassette nach Anspruch 8, wobei die zweite Sensoröffnung (125) eine A3 Sensoröffnung (125) ist, vorgeschlagen gemäß dem Standard der DVD-RAM Spezifikationen, bei einer Bedingung, dass die A3 Sensoröffnung (125) angrenzend zu einer Aufzeichnungsvermeidungs-Sensoröffnung (26) positioniert ist, um das nachfolgende Öffnen/Schließen der A3 Sensoröffnung (125) und der Aufzeichnungsvermeidungs-Sensoröffnung (26) zu gestatten.

18. Kassette nach Anspruch 17, wobei die Vorrichtung (152) zum Öffnen/Schließen der Sensoröffnung (125) enthält:
einen Links- und Rechts-Verriegelungsvorsprung (120a, 153a), angrenzend gebildet bei den jeweiligen Außenseitenenden der A3 Sensoröffnung (125) und der Aufzeichnungsvermeidungs-Sensoröffnung (26), gebildet an dem Kassettengehäuse; und
einen Sensorhebel (150) zum Steuern einer der zwei Sensoröffnungen (124, 125) zu dem geschlossenen Zustand mittels dem zugeordneten Verriegelungsvorsprung, und bei Nichtvorliegen der Spannung, zum Steuern beider Sensoröffnungen (124, 125) zu dem geschlossenen Zustand durch Positionieren bei der Mitte.

19. Kassette nach Anspruch 18, wobei der Sensorhebel (150) enthält:
ein Öffnungs-/Schließelement (152) zum Abdecken sowohl der A3 Sensoröffnung (125) als auch der Aufzeichnungsvermeidungs-Sensoröffnung (26), die angrenzend positioniert sind; und
einen Spannungshebel (121), angeordnet an der Öffnungsabdeckung (140), zum Halten des Öffnungs-/Schließelements (152), und zum Zulassen der Rückführung des Öffnungs-/Schließelements (152) zu der jeweiligen Position während dem Öffnen/Schließen des Öffnungs-/Schließelements (152).

20. Kassette nach Anspruch 18, wobei der Sensorhebel (150) automatisch zu der Mittenposition dann rückgeführt wird, wenn die geöffnete Öffnungsabdeckung (140) geschlossen ist.

21. Kassette nach einem der Ansprüche 17 bis 20, wobei die A3 Sensoröffnung (125) nicht den Aufzeichnungsprozess dann beeinflusst, wenn die Aufzeichnungsvermeidungs-Sensoröffnung (26) in einem geöffneten Zustand vorliegt, während die A3 Sensoröffnung (125) entweder in einem geschlossenen Zustand oder einem geöffneten Zustand vorliegen kann, wenn die Aufzeichnungsvermeidungs-Sensoröffnung (26) in einem geschlossenen Zustand vorliegt, und ein geschlossener Zustand der A3 Sensoröffnung (125) das Erfordernis für einen Verifikationsprozess bei einem Aufzeichnen anzeigt, während der geöffnete Zustand der A3 Sensoröffnung (125) anzeigt, dass keine Anforderung für den Verifikationsprozess während dem Aufzeichnen besteht.

22. Kassette nach Anspruch 1, bei der:
eine Öffnungsabdeckung (40, 140) vorgesehen ist, getrennt montiert an einer Rückseite des Kassettengehäuses (10), zum Halten der Platte, die von dem Kassettengehäuse (10) herauszunehmen ist bzw. von diesem aufzunehmen ist;
wobei zumindest eine Sensoröffnung (24, 124, 125) enthält: eine ovale Sensoröffnung (24, 125); eine Integration der Aufzeichnungsvermeidungs-Sensoröffnung (26); und eine Sensoröffnung (124) zum Anzeigen, ob die Platte von dem Kassettengehäuse herausgenommen wurde oder nicht;
Links- und Rechts-Verriegelungsvorsprünge (120a, 152a), angrenzend an beiden Seiten der ovalen Sensoröffnung (24, 125) vorgesehen; und
einen Sensorhebel (150), vorgesehen zum Steuern einer der beiden Sensoröffnungen (24, 125) zu dem geschlossenen Zustand mittels einem entsprechenden Verriegelungsvorsprung und zum Steuern der beiden Sensoröffnungen in den geschlossenen Zustand, während er bei der Mitte positioniert ist.

23. Kassette nach Anspruch 22, wobei der Sensorhebel (150) enthält:
ein Öffnungs-/Schließelement (152) zum Abdecken sowohl der A3 Sensoröffnung (125) als auch der Aufzeichnungsvermeidungs-Sensoröffnung (26), die angrenzend positioniert sind;
eine Spannungsrippe (154), angeordnet bei der Öffnungsabdeckung (140), zum Ermöglichen einer Rückführung des Öffnungs-/Schließelements (152) während dem Öffnen/Schließen des Öffnungs-/Schließelements (152).

24. Kassette nach Anspruch 22 oder 23, wobei der Sensorhebel (150) automatisch zu der Mittenposition rückgeführt wird, wenn die geöffnete Öffnungsabdeckung (140) geschlossen ist.

25. Kassette nach Anspruch 22, 23 oder 24, wobei die A3 Sensoröffnung (125) nicht den Aufzeichnungsprozess beeinflusst, wenn die Aufzeichnungsvermeidungs-Sensoröffnung (26) in dem geöffneten Zustand vorliegt, während die A3 Sensoröffnung (125) entweder in den geschlossenen Zustand oder in einem geöffneten Zustand dann vorliegen kann, wenn die Aufzeichnungsvermeidungs-Sensoröffnung (26) in dem geschlossenen Zustand vorliegt, und der geschlossene Zustand der A3 Sensoröffnung (125) anzeigt, dass der Verifikationsprozess während dem Aufzeichnen erforderlich ist, während der geöffnete Zustand der A3 Sensoröffnung (125) anzeigt, dass keine Anforderung während dem Verifikationsprozess während dem Aufzeichnen besteht.

26. Verfahren zum Treiben einer Kassette mit einer Sensoröffnung (24, 125), die zu öffnen/schließen ist, wobei das Verfahren folgende Schritte enthält:
(a) Bestimmen, ob die Sensoröffnung (24, 125) eines eingefügten Kassettengehäuses in einem ersten Zustand vorliegt, der anzeigt, dass das Kassettengehäuse zum Herausnehmen oder Ersetzen der Platte in dem Kassettengehäuse geöffnet wurde;
(b) Ausführen eines Zertifikationsprozesses, wenn die Sensoröffnung (24, 25) in dem ersten Zustand vorliegt; und **gekennzeichnet durch**
(c) manuelles Steuern der Sensoröffnung (24, 125) bei Abschließen des Zertifikationsprozesses, zum Setzen der Sensoröffnung (24, 25) in einen Nach-Zertifikationsund/oder einen Neu-Zertifkationszustand.

27. Verfahren nach Anspruch 26, wobei dem Schritt (c) ein zusätzlicher Schritt (d) zum Aufzeichnen von Information ohne Verifikationsprozess folgt.

28. Verfahren nach Anspruch 26 oder 27, ferner enthaltend einen zusätzlichen Schritt (e) zum Aufzeichnen der Information durch den Verifikationsprozess ohne den Zertifikationsprozess, wenn die Sensoröffnung in dem ersten Zustand vorliegt.

29. Verfahren nach Anspruch 26, 27 oder 28, wobei der Schritt (a) ferner enthält:
einen Schritt (a1), um empfehlend den Anwender dahingehend informieren, dass er den Informationsverarbeitungsprozess beschleunigen kann, durch Einstellen der Sensoröffnung der eingefügten Kassette bei dem ersten Zustand und durch Ausführen des Zertifikationsprozesses.

30. Verfahren nach Anspruch 26, 27, 28 oder 29, wobei der Schritt (b) ferner enthält:
einen Schritt (b1) zum Informieren des Anwenders zum Ausführen des Zertifikationsprozesses während Beibehalten vorab existierender Information, zusammen mit einer Empfehlung für eine Plattenreinigung, wenn Defekte vorliegen, die einen vorgegebenen Umfang übersteigen.

31. Verfahren nach einem der Ansprüche 26 bis 30, wobei der Schritt (c) ferner enthält:
einen Schritt (c1), um empfehlender Weise den Anwender dahingehend zu informieren, dass er den Informationsverarbeitungsprozess beschleunigen kann, durch Festlegen der Sensoröffnung zu dem inspizierten Zustand und durch Nichtausführen des Verifikationsprozesses.

32. Verfahren nach Anspruch 31, wobei der inspizierte Zustand ein zweiter Zustand ist, bei dem die Sensoröffnung (24, 125) erfasst, dass die Platte niemals aus der Kassette herausgenommen wurde.

33. Verfahren nach Anspruch 32, wobei unter der Voraussetzung, dass die Sensoröffnung (24) eine A1 Sensoröffnung (24) ist, vorgeschlagen gemäß dem Standard der DVD-RAM Spezifikationen, der erste Zustand der geöffnete Zustand der Sensoröffnung (24) ist, während der zweite Zustand der geschlossene Zustand der Sensoröffnung (24) ist.

34. Verfahren nach Anspruch 32, wobei unter der Voraussetzung, dass die Sensoröffnung eine A3 Sensoröffnung (125) ist, vorgeschlagen gemäß dem Standard der DVD-RAM Spezifikationen, der erste Zustand der geschlossene Zustand der Sensoröffnung (125) ist, während der zweite Zustand der geöffnete Zustand der Sensoröffnungen (125) ist.

35. Verfahren nach Anspruch 32, wobei unter der Voraussetzung, dass die Sensoröffnung die A1 Sensoröffnung (24) enthält, die nie zu öffnen/schließen ist, und zum Anzeigen der Tatsache, dass die Platte aus dem Kassettengehäuse herausgenommen wurde oder nicht, der erste Zustand der geschlossene Zustand ist, während der zweite Zustand der geöffnete Zustand ist.

36. Verfahren nach Anspruch 32, wobei unter der Voraussetzung, dass die Sensoröffnung die Sensoröffnung angrenzend positioniert zu der Aufzeichnungsvermeidungs-Sensoröffnung ist, und mit einer Steuerung zum Öffnen/Schließen hiervon mittels einem Sensorhebel (150), der erste Zustand der geschlossene Zustand ist und der zweite Zustand der geöffnete Zustand ist.

37. Verfahren nach Anspruch 36, ferner enthaltend einen Schritt (f), um vorzugsweise das Aufzeichnen zu vermeiden, unter Vorgabe einer Priorität zu dem geöffneten Zustand der Aufzeichnungsvermeidungs-Sensoröffnung (24, 125) gegenüber der Sensoröffnung (24, 125).

## Revendications

1. Cartouche comprenant :
un boîtier de cartouche (10) pour recevoir un disque ; et
au moins un trou de détection (24, 125) pour détecter si le boîtier de cartouche (10) a été ouvert ou non pour retirer ou remplacer le disque situé à l'intérieur du boîtier de cartouche (10) ; **caractérisée en ce que** la cartouche comprend en outre :
un moyen (50/150) pour ouvrir / fermer manuellement le trou de détection (24, 125) après le retour du disque dans le boîtier de cartouche (10) selon que le disque est dans un état de cartouche ouverte correspondant à un état de post-certification et/ou de re-certification.

2. Cartouche selon la revendication 1, dans laquelle le disque est un disque double face, et le trou de détection (24, 125) correspond aux deux faces du disque, pour détecter si le disque a été retiré ou non du boîtier de cartouche (10).

3. Cartouche selon la revendication 1 ou la revendication 2, dans laquelle un couvercle ouvrant (40, 140) est monté de manière séparable sur un côté arrière du boîtier de cartouche (10), pour supporter le disque à extraire / recevoir du / dans le boîtier de cartouche (10) et, dans laquelle un levier de détection (50, 150) comporte un élément d'ouverture / fermeture (52, 152) disposé au niveau du trou de détection (24, 125) pour commander l'ouverture / fermeture du trou de détection (24, 125) selon l'état de certification du disque, et un élément de tension (54, 154) s'étend sur un côté du levier de détection (50, 150) pour être en contact avec une surface latérale intérieure du boîtier de cartouche, pour exercer une tension d'un degré prédéterminé sur le levier de détection (50, 150) et pour positionner l'élément d'ouverture / fermeture (52, 152) du levier de détection dans la position ouverte du trou de détection (24, 125) quand le couvercle ouvrant (40, 140) est ouvert.

4. Cartouche selon la revendication 3, dans laquelle l'élément d'ouverture / fermeture (52, 152) positionné dans la position fermée du trou de détection (24, 125) est déplacé vers la position ouverte et maintient l'état ouvert du trou de détection (24, 125) quand le couvercle ouvrant (40, 140) est ouvert.

5. Cartouche selon la revendication 4 ou 5, comprenant en outre un dispositif de verrouillage (44) pour empêcher de manière supportable l'élément d'ouverture / fermeture (52, 152) de revenir à l'état ouvert sous l'effet de la tension de rappel de l'élément de tension (54, 154) du levier de détection (50, 150) une fois que l'élément d'ouverture / fermeture (52, 152) est déplacé de la position ouverte à la position fermée par une force extérieure dépassant une valeur prédéterminée.

6. Cartouche selon la revendication 1 ou la revendication 2, dans laquelle il est prévu :
un couvercle ouvrant (40) monté de manière séparable sur un côté arrière du boîtier, pour supporter le disque à retirer / recevoir du / dans le boîtier de cartouche ; et
un trou de détection A1 (124) ne devant jamais être ouvert / fermé, pour déterminer si le disque a été retiré ou non du boîtier de cartouche, le trou de détection (125) pour détecter si le disque a été retiré ou non du boîtier de cartouche comprenant un deuxième trou de détection (125) en coopération avec lequel le moyen (150) d'ouverture / fermeture selon les états du disque fonctionne.

7. Cartouche selon la revendication 6, dans laquelle le couvercle ouvrant (140) a un trou de détection horizontal (148) en plus du trou de détection A1 et du deuxième trou de détection, ces trous étant définis à travers les parties supérieure et inférieure du boîtier de cartouche, pour être utilisés dans un lecteur ayant un interrupteur de détection vertical aussi bien que dans un lecteur ayant un interrupteur de détection horizontal.

8. Cartouche selon la revendication 6 ou 7, dans laquelle le deuxième trou de détection (125) comprend un trou de détection A3 suggéré par des spécifications standards de DVD-RAM.

9. Cartouche selon la revendication 8, dans laquelle le moyen d'ouverture / fermeture du trou de détection comprend :
un élément d'ouverture / fermeture (152) disposé de façon mobile sur le couvercle ouvrant (140) correspondant au trou de détection A3 (125), pour être déplacé vers la position fermée et vers la position ouverte du trou de détection A3 (125), pour ouvrir de manière sélective le trou de détection A3 (125) ;
une nervure de tension (154) pour supporter de façon élastique l'élément d'ouverture / fermeture (152) afin de maintenir la position de l'élément d'ouverture / fermeture (152) dans la position fermée du trou de détection A3 (125) ; et
un moyen de verrouillage (120a, 152a) pour maintenir la position de l'élément d'ouverture / fermeture (150) qui a été déplacé vers la position ouverte du trou de détection A3 (125).

10. Cartouche selon la revendication 9, dans laquelle le moyen de verrouillage (120a, 152a) comprend :
une saillie de verrouillage (152a) dépassant d'une surface latérale supérieure de l'élément d'ouverture / fermeture (140) ; et
une partie de verrouillage (120a) formée au niveau d'un côté intérieur du boîtier de cartouche, tout en correspondant à la saillie de verrouillage (152a), dans laquelle une partie en retrait (152b) est formée au niveau de l'autre côté de l'élément d'ouverture / fermeture (152), pour déplacer l'élément d'ouverture / fermeture (152).

11. Cartouche selon la revendication 9 ou 10 comprenant en outre un levier de retour pour pousser l'élément d'ouverture / fermeture (152) qui a été déplacé vers la position ouverte du trou de détection A3 (125) et pour ramener l'élément d'ouverture / fermeture (152) vers la position fermée, à la suite du mouvement d'ouverture du couvercle ouvrant (140).

12. Cartouche selon la revendication 9, 10 ou 11, dans laquelle l'élément d'ouverture / fermeture (152) s'étend au delà de la position du trou de détection A1 (124), un espace correspondant au trou de détection A1 (124) est formé au niveau de l'espace, une languette (124a) est disposée de manière supportable à l'intérieur d'une circonférence intérieure de l'espace ou au niveau du boîtier de cartouche tout en recouvrant le trou de détection A1 (124), et l'élément d'ouverture / fermeture (152) n'est pas déplacé en présence de la languette (124a).

13. Cartouche selon la revendication 12, dans laquelle le trou de détection A3 (125) est toujours dans l'état fermé quand le trou de détection A1 (124) est dans l'état fermé, et le trou de détection A3 (125) est dans l'état fermé ou dans l'état ouvert quand le trou de détection A1 (124) est dans l'état ouvert, l'état fermé du trou de détection A3 (125) indiquant qu'un processus de vérification est nécessaire pendant l'enregistrement, tandis que l'état ouvert du trou de détection A3 (125) n'indique aucun besoin de processus de vérification pendant l'enregistrement.

14. Cartouche selon la revendication 8, dans laquelle le moyen (150) pour ouvrir / fermer le trou de détection (125) comprend :
un élément d'ouverture / fermeture (152) disposé de manière coulissante sur le couvercle ouvrant (140) correspondant au trou de détection A3 (125), afin d'être déplacé vers la position fermée et vers la position ouverte du trou de détection A3 (125), pour ouvrir de manière sélective le trou de détection A3 (125) ;
un moyen (181) pour guider le mouvement de l'élément d'ouverture / fermeture (152) ; et
un moyen de verrouillage (191, 192) pour maintenir la position de l'élément d'ouverture / fermeture (152) qui a été déplacé vers la position ouverte du trou de détection A3 (125).

15. Cartouche selon la revendication 14, dans laquelle l'élément d'ouverture / fermeture (152) s'étend au delà de la position du trou de détection A1 (124), un espace est défini au niveau de la partie d'extension de l'élément d'ouverture / fermeture (152), une languette (124a) est disposée de manière supportable à l'intérieur d'une circonférence intérieure de l'espace ou au niveau du boîtier de cartouche tout en recouvrant le trou de détection A1 (124), et l'élément d'ouverture / fermeture (152) n'est pas déplacé en présence de la languette (124a).

16. Cartouche selon la revendication 14, dans laquelle l'élément d'ouverture / fermeture (152) est automatiquement ramené dans la position fermée du trou de détection A3 (125) quand le couvercle ouvrant (140) qui a été ouvert est fermé.

17. Cartouche selon la revendication 8, dans laquelle le deuxième trou de détection (125) est un trou de détection A3 (125) suggéré par des spécifications standards de DVD-RAM, dans un état où le trou de détection A3 (125) est positionné à proximité d'un trou de détection de protection contre l'enregistrement (26), pour permettre l'ouverture / fermeture suivante du trou de détection A3 (125) et du trou de détection de protection contre l'enregistrement (26).

18. Cartouche selon la revendication 17, dans laquelle le moyen (152) pour ouvrir / fermer le trou de détection (125) comprend :
des saillies de verrouillage gauche et droite (120a, 152a) formées à proximité des extrémités latérales extérieures respectives du trou de détection A3 (125) et du trou de détection de protection contre l'enregistrement (26) formés sur le boîtier de cartouche ; et
un levier de détection (150) pour commander l'un des deux trous de détection (124, 125) à l'état fermé au moyen de la saillie de verrouillage correspondante, et en l'absence de tension, pour commander les deux trous de détection (124, 125) à l'état fermé lorsqu'il est positionné au milieu.

19. Cartouche selon la revendication 18, dans laquelle le levier de détection (150) comprend :
un élément d'ouverture / fermeture (152) pour recouvrir à la fois le trou de détection A3 (125) et le trou de détection de protection contre l'enregistrement (26) qui sont dans des positions adjacentes ; et
un levier de tension (141) disposé sur le couvercle ouvrant (140), pour supporter l'élément d'ouverture / fermeture (152), et pour permettre le retour de l'élément d'ouverture / fermeture (152) dans la position correspondante tout en ouvrant / fermant l'élément d'ouverture / fermeture (152).

20. Cartouche selon la revendication 18, dans laquelle le levier de détection (150) est automatiquement ramené à la position médiane quand le couvercle ouvrant (140) qui était ouvert est fermé.

21. Cartouche selon l'une quelconque des revendications 17 à 20, dans laquelle le trou de détection A3 (125) n'effectue pas de processus d'enregistrement quand le trou de détection de protection contre l'enregistrement (26) est dans l'état ouvert, tandis que le trou de détection A3 (125) peut être dans l'état fermé ou dans l'état ouvert quand le trou de détection de protection contre l'enregistrement (26) est dans l'état fermé, et l'état fermé du trou de détection A3 (125) indique que le processus de vérification est nécessaire pendant l'enregistrement, tandis que l'état ouvert du trou de détection A3 (125) n'indique aucun besoin de processus de vérification pendant l'enregistrement.

22. Cartouche selon la revendication 1, dans laquelle :
un couvercle ouvrant (40, 140) est monté de manière séparable sur un côté arrière du boîtier de cartouche (10), pour supporter le disque à retirer / recevoir du / dans le boîtier de cartouche (10) ;
ledit trou de détection (24, 124, 125) comprend : un trou de détection ovale (24, 125) ; une intégration de trou de détection de protection contre l'enregistrement (26) ; et un trou de détection (124) pour indiquer si le disque a été retiré ou non du boîtier de cartouche ;
des saillies de verrouillage gauche et droite (120a, 152a) sont formées à proximité des deux côtés du trou de détection ovale (24, 125) ; et
un levier de capteur (150) est prévu pour commander l'un des deux trous de détection (24, 125) à l'état fermé au moyen de la saillie de verrouillage correspondante, et pour commander les deux trous de détection à l'état fermé lorsqu'il est positionné au milieu.

23. Cartouche selon la revendication 22, dans laquelle le levier de détection (150) comprend ;
un élément d'ouverture / fermeture (152) pour recouvrir à la fois le trou de détection A3 (125) et le trou de détection de protection contre l'enregistrement (26) qui sont dans des positions adjacentes ;
une nervure de tension (154) disposée sur le couvercle ouvrant (140) pour permettre le retour de l'élément d'ouverture / fermeture (152) tout en ouvrant / fermant l'élément d'ouverture / fermeture (152).

24. Cartouche selon la revendication 22 ou 23, dans laquelle le levier de détection (150) est automatiquement ramené dans la position médiane quand le couvercle ouvrant (140) qui a été ouvert est fermé.

25. Cartouche selon la revendication 22, 23 ou 24, dans laquelle le trou de détection A3 (125) n'effectue pas de processus d'enregistrement quand le trou de détection de protection contre l'enregistrement (26) est dans l'état ouvert, tandis que le trou de détection A3 (125) peut être dans l'état fermé ou dans l'état ouvert quand le trou de détection de protection contre l'enregistrement (26) est dans l'état fermé, l'état fermé du trou de détection A3 (125) indiquant qu'un processus de vérification est nécessaire pendant l'enregistrement, tandis que l'état ouvert du trou de détection A3 (125) n'indique aucun besoin de processus de vérification pendant l'enregistrement.

26. Procédé de lecture d'une cartouche ayant un trou de détection (24, 125) à ouvrir / fermer, procédé comprenant les étapes consistant à :
(a) déterminer si le trou de détection (24, 125) d'un boîtier de cartouche inséré est dans un premier état indiquant que le boîtier de cartouche a été ouvert pour retirer ou remplacer le disque dans le boîtier de cartouche ;
(b) exécuter un processus de certification quand le trou de détection (24, 125) est dans le premier état ; et **caractérisé par** une étape consistant à
(c) commander manuellement le trou de détection (24, 125) lors de l'achèvement du processus de certification, pour mettre le trou de détection (24, 125) dans un état de post-certification et/ou recertification.

27. Procédé selon la revendication 26, dans lequel l'étape (c) est suivie par une étape supplémentaire (d) consistant à enregistrer des informations sans processus de vérification.

28. Procédé selon la revendication 26 ou 27, comprenant en outre une étape supplémentaire (e) d'enregistrement des informations par l'intermédiaire du processus de vérification sans le processus de certification quand le trou de détection est dans le premier état.

29. Procédé selon la revendication 26, 27 ou 28, dans lequel l'étape (a) comprend en outre :
une étape (a1) consistant à informer, par une recommandation, l'utilisateur qu'il peut accélérer le processus de traitement des informations en mettant le trou de détection de la cartouche insérée au premier état et en effectuant le processus de certification.

30. Procédé selon la revendication 26, 27, 28 ou 29, dans lequel l'étape (b) comprend en outre :
une étape (b1) consistant à informer l'utilisateur pour qu'il effectue le processus de certification tout en maintenant des informations précédemment existantes, en même temps qu'une recommandation de nettoyage du disque quand des défauts existants dépassent une quantité prédéterminée.

31. Procédé selon l'une quelconque des revendications 26 à 30, dans lequel l'étape (c) comprend en outre :
une étape (cl) consistant à informer, par recommandation, l'utilisateur qu'il peut accélérer le processus de traitement des informations en mettant le trou de détection à l'état examiné et en n'effectuant pas le processus de vérification.

32. Procédé selon la revendication 31, dans lequel l'état examiné est un second état dans lequel le trou de détection (24, 125) détecte que le disque n'a jamais été retiré de la cartouche.

33. Procédé selon la revendication 32, dans lequel, à condition que le trou de détection (24) soit un trou de détection A1 (24) suggéré par des spécifications standards de DVD-RAM, le premier état est l'état ouvert du trou de détection (24), tandis que le second état est l'état fermé du trou de détection (24).

34. Procédé selon la revendication 32, dans lequel, à condition que le trou de détection soit un trou de détection A3 (125) suggéré par des spécifications standards de DVD-RAM, le premier état est l'état fermé du trou de détection (125), tandis que le second état est l'état ouvert du trou de détection (125).

35. Procédé selon la revendication 32, dans lequel, à condition que le trou de détection comprenne le trou de détection A1 (24) qui ne doit jamais être ouvert / fermé et pour indiquer que le disque a été retiré ou non du boîtier de cartouche, le premier état est l'état fermé, tandis que le second état est l'état ouvert.

36. Procédé selon la revendication 32, dans lequel, à condition que le trou de détection soit le trou de détection situé dans une position adjacente au trou de détection de protection contre l'enregistrement et commandé avec l'ouverture / fermeture de ce dernier par un levier de détection (150), le premier état est l'état fermé et le second état est l'état ouvert.

37. Procédé selon la revendication 36, comprenant en outre une étape (f) consistant à empêcher préférentiellement l'enregistrement, en donnant une priorité pour l'état ouvert du trou de détection de protection contre l'enregistrement (24, 125) au trou de détection (24, 125).
